(19)

**Europäisches Patentamt**
**European Patent Office**
**Office européen des brevets**

(11) **EP 2 696 223 A2**

(12) **EUROPEAN PATENT APPLICATION**

(43) Date of publication:
**12.02.2014 Bulletin 2014/07**

(21) Application number: **13174277.7**

(22) Date of filing: **28.06.2013**

(51) Int Cl.:
**G02B 5/02** (2006.01)    **G02B 1/11** (2006.01)
**G02B 5/30** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.06.2012 JP 2012146166**
**27.12.2012 JP 2012286384**

(71) Applicant: **Nitto Denko Corporation**
**Osaka 567-8680 (JP)**

(72) Inventors:
• **Kishi, Atsushi**
**Osaka, 567-8680 (JP)**
• **Ninomiya, Masaki**
**Osaka, 567-8680 (JP)**
• **Hashimoto, Naoki**
**Osaka, 567-8680 (JP)**
• **Kuramoto, Hiroki**
**Osaka, 567-8680 (JP)**
• **Takemoto, Hiroyuki**
**Osaka, 567-8680 (JP)**

(74) Representative: **HOFFMANN EITLE**
**Patent- und Rechtsanwälte**
**Arabellastrasse 4**
**81925 München (DE)**

(54) **Method for producing anti-glare film, anti-glare film, polarizing plate, and image display**

(57)    A method for producing an anti-glare film, capable of widely and freely control a surface profile of the anti-glare film. The method including the steps of: coating a coating solution on at least one surface of a translucent base (20) to form a coating layer (21); and curing the coating solution to form an anti-glare layer (11), wherein the coating solution contains a resin, particles (12), and a solvent, the method further includes the step of: shearing the coating solution coated on the translucent base (20), and a surface profile of the anti-glare film is adjusted by adjusting a shear distance of the coating layer (21), defined by the following equation (I) in the step of shearing,

$$S = \int V dt \quad \text{(I)}$$

V: shear velocity (m/s)
t: shear holding time (s).

FIG. 2A

EP 2 696 223 A2

FIG. 2B

**Description**

Technical Field

The present invention relates to a method for producing an anti-glare film, an anti-glare film, a polarizing plate, and an image display.

Background Art

Anti-glare films are disposed on the surfaces of various image displays such as cathode ray tubes (CRTs), liquid crystal displays (LCDs), plasma display panels (PDPs), and electroluminescence displays (ELDs) in order to prevent a reduction in contrast due to reflection of external light and reflected glare of images. Various methods for forming an anti-glare film have been proposed in order to achieve both of appropriate anti-glare properties and an improvement in physical properties in the anti-glare films.

For example, a method for producing an anti-glare film in which, in order to reduce a point defect has been proposed, a translucent base is transferred at an angle of -40° or more to +40° or less to the horizontal direction immediately after coating a particle-containing coating solution for forming an anti-glare layer on the translucent base (Patent Document 1).

A method for producing an anti-glare film in which, in order to enhance a flocculating effect of particles has been proposed, a translucent base is maintained or transferred in the state of tilting 30° to 90° at the time of drying the translucent base after coating a particle-containing coating solution for forming an anti-glare layer on the translucent base (Patent Document 2).

Prior Art Documents

Patent Document

Patent Document 1: JP 2010-102291 A
Patent Document 2: JP 2010-54737 A

Summary of Invention

Problem to be Solved by the Invention

However, it has been difficult to control asperities on the surface of the anti-glare film by particles merely by adjusting a tilt angle of a translucent base immediately after coating a coating solution or at the time of drying as in Patent Documents 1 and 2.

The present invention is intended to provide a method for producing an anti-glare film, capable of widely and freely control a surface profile of the anti-glare film and an anti-glare film produced by the method. The present invention is intended to further provide a polarizing plate and an image display, using this anti-glare film.

In order to achieve the aforementioned object, the method for producing an anti-glare film according to the present invention is a method for producing an anti-glare film, the method including the steps of coating a coating solution on at least one surface of a translucent base to form a coating layer; and curing the coating solution to form an anti-glare layer, wherein the coating solution contains a resin, particles, and a solvent, the method further includes the step of shearing the coating solution coated on the translucent base, and a surface profile of the anti-glare film is adjusted by adjusting a shear distance of the coating layer, defined by the following equation (I) in the step of shearing,

$$ S = \int V dt \quad (I) $$

where in the equation (I)
S: shear distance (m)
V: shear velocity (m/s)
t: shear holding time (s), and
the shear velocity V is defined by the following equation (II):

$$V = kah^2/\eta \qquad (II)$$

where in the equation (II)
k: specific gravity of coating layer ($kg/m^3$)
a: acceleration ($m/s^2$)
h: thickness of coating layer (m)
$\eta$: viscosity of coating layer (Pa•s)
provided that the acceleration a may change over time or may be constant.

The anti-glare film according to the present invention is produced by the method for producing an anti-glare film according to the present invention.

The polarizing plate according to the present invention includes: a polarizer and the anti-glare film according to the present invention.

The image display according to the present invention includes: the anti-glare film according to the present invention.

The image display according to the present invention includes: the polarizing plate according to the present invention.

Effects of the Invention

According to the method for producing an anti-glare film of the present invention, a surface profile of the anti-glare film can be widely and freely controlled. Specifically, for example, an arithmetic average surface roughness Ra, an average convex-to-convex distance Sm, an average tilt angle $\theta$a, and the like described below on the surface of the anti-glare film can be widely and freely adjusted (controlled).

Brief Description of Drawings

[FIG. 1] FIG. 1 is a schematic view illustrating a method for calculating the shear velocity V of a coating layer.
[FIG. 2] FIG. 2A is a schematic view showing an example of a method for adjusting the shear velocity V of a coating layer in the method for producing an anti-glare film according to the present invention. FIG. 2B is a schematic view showing another example of a method for adjusting the shear velocity V of a coating layer in the method for producing an anti-glare film according to the present invention.
[FIG. 3] FIG. 3 is a schematic view illustrating the definition of the height of a convex portion.
[FIG. 4] FIG. 4 is a schematic view showing an example of the case where the shear velocity V changes depending on the shear holding time t.
[FIG. 5] FIG. 5 is a schematic view showing the configuration of an example of the anti-glare film according to the present invention.
[FIG. 6] FIG. 6 is a diagram schematically illustrating an assumable mechanism in relation to flocculation of particles in the anti-glare film according to the present invention.
[FIG. 7] FIGs. 7A and 7B are schematic views illustrating an example of the definitions of the thickness direction and the in-plane direction of the anti-glare layer in the anti-glare film according to the present invention.
[FIG. 8] FIG. 8 is a diagram schematically illustrating an assumable mechanism in relation to flocculation of particles in the case where a permeable layer is formed in the anti-glare film according to the present invention.
[FIG. 9] FIG. 9 is a schematic view showing the relationship between the Ti value of a coating solution and an assumable distribution of thixotropy-imparting agents.
[FIG. 10] FIG. 10 is a graph schematically showing an example of the surface profile control of the anti-glare film by the shear distance and the number of parts by weight of particles in the method for producing an anti-glare film according to the present invention.
[FIG. 11] FIG. 11 is a graph showing surface profiles (the average convex-to-convex distances Sm and the average tilt angles $\theta$a) of anti-glare films of the examples.

Description of Embodiments

In the method for producing an anti-glare film according to the present invention, it is preferred that the shear distance S of the coating layer in the step of shearing is set in a range from $0.005 \times 10^{-9}$ to $120 \times 10^{-9}$ m.

In the method for producing an anti-glare film according to the present invention, the shear velocity V is preferably set in a range from $0.05 \times 10^{-9}$ to $2.0 \times 10^{-9}$ m/s, more preferably from $0.05 \times 10^{-9}$ to $1.0 \times 10^{-9}$ m/s.

In the method for producing an anti-glare film according to the present invention, it is preferred that the shear holding time is set in a range from 0.1 to 60 s.

In the method for producing an anti-glare film according to the present invention, it is preferred that, as the coating solution, a coating solution containing thixotropy-imparting agents (thixotropic agents) is used.

In the method for producing an anti-glare film according to the present invention, it is preferred that the thixotropy-imparting agents are at least one selected from the group consisting of organoclay, oxidized polyolefin, and denatured urea.

In the method for producing an anti-glare film according to the present invention, it is preferred that the anti-glare layer has a thickness (d) in a range from 3 to 12 $\mu$m, and the particles has a particle size (D) in a range from 2.5 to 10 $\mu$m. In this case, it is preferred that a relationship between the thickness (d) and the particles size (D) is $0.3 \leq D/d \leq 0.9$.

In the method for producing an anti-glare film according to the present invention, it is preferred that a surface profile of the anti-glare film is adjusted by adjusting the number of parts by weight of the particles relative to 100 parts by weight of the resin in the coating solution.

In the method for producing an anti-glare film according to the present invention, it is preferred that the coating solution contains from 0.2 to 12 parts by weight of the particles relative to 100 parts by weight of the resin.

In the anti-glare film according to the present invention, it is preferred that the anti-glare layer includes a flocculated portion forming a convex portion on a surface of the anti-glare layer by flocculation of the particles, and, in the flocculated portion, the particles are present in the state of being gathered in one direction in an in-plane direction of the anti-glare layer

In the anti-glare film according to the present invention, it is preferred that the convex portion has a height from a roughness mean line of the anti-glare layer of less than 0.4 times the thickness of the anti-glare layer.

In the anti-glare film according to the present invention, it is preferred that the number of defects in outward appearance having a maximum diameter of 200 $\mu$m or more is 1 or less per 1 m$^2$ of the anti-glare layer.

It is preferred that the anti-glare film according to the present invention includes a permeable layer formed by permeating the resin through the translucent base, between the translucent base and the anti-glare layer.

It is preferred that the image display according to the present invention is an image display including: the anti-glare film at a visible side surface; and further a black matrix pattern, wherein the antiglare layer of the anti-glare film includes a flocculated portion forming a convex portion on a surface of the anti-glare layer by flocculation of the particles, in the flocculated portion, the particles are present in the state of being gathered in one direction in an in-plane direction of the anti-glare layer, and the anti-glare film is placed so that the one direction in which the particles are gathered coincides with a longitudinal direction of the black matrix pattern.

Next, the method for producing an anti-glare film according to the present invention is described with reference to examples. The method for producing an anti-glare film according to the present invention is, as mentioned above, a method for producing an anti-glare film, including: coating a coating solution on at least one surface of a translucent base to form a coating layer; and curing the coating solution to form an anti-glare layer. According to the method for producing an anti-glare film according to the present invention, as mentioned above, a surface profile of the anti-glare film can be adjusted by adjusting a shear distance of the coating layer in the step of shearing. As mentioned above, it is preferred that a surface profile of the anti-glare film is adjusted by adjusting the number of parts by weight of the particles relative to 100 parts by weight of the resin in the coating solution if necessary. As described above, a surface profile of the anti-glare film can be widely and freely changed (controlled) even when the same kinds of the resin and the particles are used, for example. Specifically, for example, the arithmetic average surface roughness Ra, the average convex-to-convex distance Sm, the average tilt angle θa, and the like described below on the surface of the anti-glare film can be widely and freely adjusted (controlled).

(1) Translucent base

The translucent base is not particularly limited, and for example, a transparent plastic film base can be used. The transparent plastic film base is not particularly limited and preferably has superior light transmittance of visible light (preferably 90% or more of light transmittance) and superior transparency (preferably 1% or less of haze value), and examples thereof include transparent plastic film bases described in JP 2008-90263 A. As the transparent plastic film base, a base having optically low birefringence is preferably used. The anti-glare film produced by the method for producing an anti-glare film according to the present invention can be used as a protective film in a polarizing plate, for example. In this case, the transparent plastic film base preferably is a film formed of triacetylcellulose (TAC), polycarbonate, an acrylic polymer, polyolefin having a cyclic structure or a norbornene structure, or the like. In the present invention, the transparent plastic film base may be a polarizer itself as mentioned below. With such configuration, it is not necessary to include a protective layer formed of TAC or the like, so that the structure of the polarizing plate can be simplified. Thus, the number of the steps of producing the polarizing plate or an image display can be reduced, so that production efficiency can be improved. Further, with such configuration, the polarizing plate can be thinner. In the case where the transparent plastic film base is a polarizer, the anti-glare layer serves as a conventional protective layer. Furthermore, with such configuration, the anti-glare film functions also as a cover plate in the case where the anti-glare film is attached to the surface of a liquid crystal cell, for example.

The thickness of the transparent plastic film base in the present invention is not particularly limited and is, for example, preferably in the range from 10 to 500 $\mu$m, more preferably from 20 to 300 $\mu$m, optimally from 30 to 200 $\mu$m from the viewpoint of strength, workability such as handleability and film thinness, for example. The refractive index of the transparent plastic film base is not particularly limited and is, for example, in the range from 1.30 to 1.80, preferably from 1.40 to 1.70.

(2) Coating solution

The coating solution contains a resin, particles, and a solvent. Examples of the resin include a heat-curable resin and an ionizing radiation-curable resin cured by ultraviolet and/or light. As the resin, a commercially available heat-curable resin and/or an ultraviolet-curable resin can also be used.

As the heat-curable resin and/or the ultraviolet-curable resin, a curable compound having at least one of an acrylate group and a methacrylate group cured by, for example, heat, light (ultraviolet or the like) and/or an electron beam can be used, and examples thereof include a silicone resin, a polyester resin, a polyether resin, an epoxy resin, an urethane resin, an alkyd resin, a spiroacetal resin, a polybutadiene resin, a polythiol polyene resin, and an oligomer and/or a prepolymer of acrylate and/or methacrylate of a polyfunctional compound such as a polyhydric alcohol. They may be used alone or in a combination of two or more of them.

In the resin, a reactive diluent having at least one of an acrylate group and a methacrylate group can be used, for example. As the reactive diluent, any of reactive diluents described in JP 2008-88309 A can be used, and examples thereof include monofunctional acrylate, monofunctional methacrylate, polyfunctional acrylate, and polyfunctional methacrylate. As the reactive diluent, acrylate having a trifunctional group or more or methacrylate having a trifunctional group or more is preferable because the hardness of the anti-glare layer can be superior. Examples of the reactive diluent also include butanediol glycerin ether diacrylate, acrylate of isocyanuric acid, and methacrylate of isocyanuric acid. They may be used alone or in a combination of two or more of them.

The main function of the particles for forming the anti-glare layer is to impart anti-glare properties by forming surface asperities of the anti-glare layer and control the haze value of the anti-glare layer. The haze value of the anti-glare layer can be designed by controlling the difference in refractive index between the particles and the resin. Examples of the particles include inorganic particles and organic particles. The inorganic particles are not particularly limited, and examples thereof include silicon oxide particles, titanium oxide particles, aluminium oxide particles, zinc oxide particles, tin oxide particles, calcium carbonate particles, barium sulfate particles, talc particles, kaolin particles, and calcium sulfate particles. The organic particles are not particularly limited, and examples thereof include a polymethyl methacrylate resin powder (PMMA particles), a silicone resin powder, a polystyrene resin powder, a polycarbonate resin powder, an acrylic styrene resin powder, a benzoguanamine resin powder, a melamine resin powder, a polyolefin resin powder, a polyester resin powder, a polyamide resin powder, a polyimide resin powder, and a polyfluoroethylene resin powder. One kind of the inorganic particles and organic particles may be used alone, or two or more kinds of the same may be used in combination.

The particle size (D) (weight-average particle size) of the particles is preferably in the range from 2.5 to 10 $\mu$m. By setting the weight-average particle size of the particles in the above-described range, the anti-glare film having further superior anti-glare properties and preventing white blur from occurring can be obtained, for example. The weight-average particle size of the particles is more preferably 3 $\mu$m or more to less than 10 $\mu$m and is, for example, from 3 to 7 $\mu$m. In an anti-glare film described in JP 2010-54737 A, the thickness of the anti-glare layer of 10 $\mu$m or more is suitable, and the thickness of less than 10 $\mu$m is not suitable. The weight-average particle size of the particles can be measured by the Coulter counter method, for example. For example, a particle size distribution measurement apparatus (COULTER MULTISIZER (trade name), produced by Beckman Coulter, Inc.) using a pore electrical resistance method is employed to measure an electrical resistance of an electrolyte corresponding to the volume of the particles when the particles pass through the pores. Thus, the number and volume of particles are measured and then the weight average particle size is calculated. The anti-glare film may have white blur, for example, as long as the white blur is prevented from occurring to the extent that a practical problem does not arise. In some cases, matte (sedate outward appearance) is obtained by causing white blur to slightly occur, which is preferable. According to the method for producing an anti-glare film of the present invention, a surface profile of the anti-glare film can be widely and freely controlled as mentioned above. Therefore, for example, whether a surface profile is a surface profile for reducing white blur or a surface profile for obtaining matte can be controlled as appropriate.

The shape of the particles is not particularly limited and may be, for example, an approximately spherical shape in the form of a bead or an indefinite shape such as a powder and is preferably an approximately spherical shape, more preferably an approximately spherical shape with an aspect ratio of 1.5 or less. Most preferably, the particles are spherical particles.

In the present invention, as mentioned above, it is preferred that a surface profile of the anti-glare film is freely controlled by adjusting the number of parts by weight of the particles relative to 100 parts by weight of the resin in the coating solution in addition to the shear distance of the coating layer in the step of shearing. The proportion of the particles in the coating solution is more preferably in the range from 0.2 to 12 parts by weight, yet more preferably from 0.5 to 12 parts by weight, particularly preferably from 1 to 7 parts by weight, relative to 100 parts by weight of the resin. By setting the proportion of the particles in the above-described range, the anti-glare film having further superior anti-glare properties and preventing white blur from occurring can be obtained, for example.

It is preferred that the coating solution further contains thixotropy-imparting agents. For example, when the coating solution contains the thixotropy-imparting agents, an anti-settling effect (thixotropic effect) of the particles is obtained, and a surface profile of the anti-glare film can be further widely and freely controlled by shear flocculation of the thixotropy-imparting agents themselves. Moreover, when the coating solution contains the thixotropy-imparting agents, an anti-glare film preventing white blur from occurring can be obtained. Examples of the thixotropy-imparting agents include organoclay, oxidized polyolefin, and denatured urea. In the case where the coating solution contains thixotropy-imparting agents, when the proportion of the particles is not too high, the state (uneven distribution state) of having a large difference between a portion in which particles are flocculated (dense) and a portion in which particles are not flocculated (sparse) can be easily obtained, so that a white blur preventive effect can be further improved. More specifically, when the coating solution contains thixotropy-imparting agents, in order to further improve a white blur preventive effect, the proportion of the particles in the coating solution is, more preferably 12 parts by weight or less, yet more preferably 10 parts by weight or less, still more preferably 6 parts by weight or less, even more preferably 5 parts by weight or less, yet still more preferably 4 parts by weight or less, particularly preferably 3 parts by weight or less, relative to 100 parts by weight of the resin. When the coating solution contains thixotropy-imparting agents, the lower limit of the proportion of the particles is more preferably 0.2 parts by weight or more relative to 100 parts by weight of the resin.

The organoclay is preferably layered clay which has been subjected to an organification treatment in order to improve affinity with the resin. The organoclay may be prepared in-house or a commercially available product. Examples of the commercially available product include LUCENTITE SAN, LUCENTITE STN, LUCENTITE SEN, LUCENTITE SPN, SOMASIF ME-100, SOMASIF MAE, SOMASIF MTE, SOMASIF MEE, and SOMASIF MPE (trade names, produced by CO-OP Chemical Co. Ltd.); S-BEN, S-BEN C, S-BEN E, S-BEN W, S-BEN P, S-BEN WX, S-BEN N-400, S-BEN NX, S-BEN NX80, S-BEN NO12S, S-BEN NEZ, S-BEN NO12, S-BEN NE, S-BEN NZ, S-BEN NZ70, ORGANAIT, ORGANAIT D, and ORGANAIT T (trade names, produced by Hojun Co., Ltd.); KUNIPIA F, KUNIPIA G, and KUNIPIA G4 (trade names, produced by Kunimine Industries, Co. Ltd.); and TIXOGEL VZ, CLAYTONE HT, and CLAYTONE 40 (trade names, produced by Rockwood Additives Limited).

The oxidized polyolefin may be prepared in-house or a commercially available product. Examples of the commercially available product include DISPARON 4200-20 (trade name, produced by Kusumoto Chemicals, Ltd.) and FLOWNON SA300 (trade name, produced by Kyoeisha Chemical Co., Ltd).

The denatured urea is a reactant of an isocyanate monomer or an adduct thereof and organic amine. The denatured urea may be prepared in-house or a commercially available product. The commercially available product can be, for example, BYK410 (produced by BYK-Chemie Corporation).

The proportion of the thixotropy-imparting agents in the coating solution is preferably in the range from 0.2 to 5 parts by weight, more preferably from 0.4 to 4 parts by weight, relative to 100 parts by weight of the resin.

One kind of the thixotropy-imparting agents may be used alone, or two or more kinds of the same may be used in combination.

The solvent is not particularly limited, and various solvents can be used. The solvents may be used alone or in a combination of two or more of them. There are optimal kinds of solvents and the optimal ratio thereof according to the composition of the resin, the kinds of the particles and the thixotropy-imparting agents, and the contents thereof. The solvent is not particularly limited, and examples thereof include alcohols such as methanol, ethanol, isopropyl alcohol, butanol, and 2-methoxyethanol; ketones such as acetone, methylethylketone, methylisobutylketone, and cyclopentanone; esters such as methyl acetate, ethyl acetate, and butyl acetate; ethers such as diisopropyl ether and propyleneglycol monomethylether; glycols such as ethyleneglycol and propyleneglycol; cellosolves such as ethyl cellosolve and butyl cellosolve; aliphatic hydrocarbons such as hexane, heptane, and octane; and aromatic hydrocarbons such as benzene, toluene, and xylene.

In the case where triacetylcellulose (TAC) is employed as a translucent base, and a permeable layer is formed, a good solvent to TAC can be suitably used, for example. Examples of the solvent include ethyl acetate, methyl ethyl ketone, and cyclopentanone.

The coating solution can favorably exert thixotropy (thixotropic properties) caused by thixotropy-imparting agents by selecting a solvent as appropriate. For example, in the case of using organoclay, toluene and xylene can be suitably used alone or in combination. For example, in the case of using oxidized polyolefin, methyl ethyl ketone, ethyl acetate, and propylene glycol monomethyl ether can be suitably used alone or in combination. For example, in the case of using denatured urea, butyl acetate and methyl isobutyl ketone can be suitably used alone or in combination.

Various leveling agents can be added to the coating solution. For the purpose of preventing unevenness in coating (causing a surface to be evenly coated), a fluorine-based leveling agent or a silicone-based leveling agent can be used as the leveling agent, for example. In the present invention, a leveling agent can be selected as appropriate according to the case where the surface of the anti-glare layer is required to have anti-smudge properties, the case where an antireflection layer (low refractive index layer) and/or a layer containing interlayer fillers is formed on the anti-glare layer as mentioned below, or the like. In the present invention, for example, the coating solution can have thixotropic properties by causing the coating solution to contain thixotropy-imparting agents. Therefore, the unevenness in coating is less prone to occur. Thus, for example, the present invention has an advantage of widening the choice of the leveling agents.

The amount of the leveling agent to be added is, for example, 5 parts by weight or less, preferably in the range from 0.01 to 5 parts by weight, relative to 100 parts by weight of the resin.

A pigment, a filler, a dispersant, a plasticizer, a UV absorber, a surfactant, an anti-smudge agent, an antioxidant, or the like may be added to the coating solution to the extent of not impairing functions of the coating solution. These additives may be used alone or in a combination of two or more of them.

Any of conventionally known photoinitiators described in JP 2008-88309 A can be used in the coating solution, for example.

It is preferred that the coating solution exerts thixotropic properties, and the Ti value thereof defined by the following equation is preferably in the range from 1.3 to 3.5, more preferably from 1.4 to 3.2, yet more preferably from 1.5 to 3.

$$\text{Ti value} = \beta 1/\beta 2$$

In the equation, β1 represents a viscosity measured at a shear velocity of 20 (1/s) using RheoStress RS6000 produced by HAAKE, and β2 represents a viscosity measured at a shear velocity of 200 (1/s) using RheoStress RS6000 produced by HAAKE.

When the Ti value is less than 1.3, a defect in outward appearance is prone to occur, and characteristics of anti-glare properties and white blur are deteriorated in some cases. When the Ti value exceeds 3.5, the particles are prone to be in the dispersed state in which the particles are difficult to be flocculated, and thus the anti-glare film according to the present invention is difficult to be obtained.

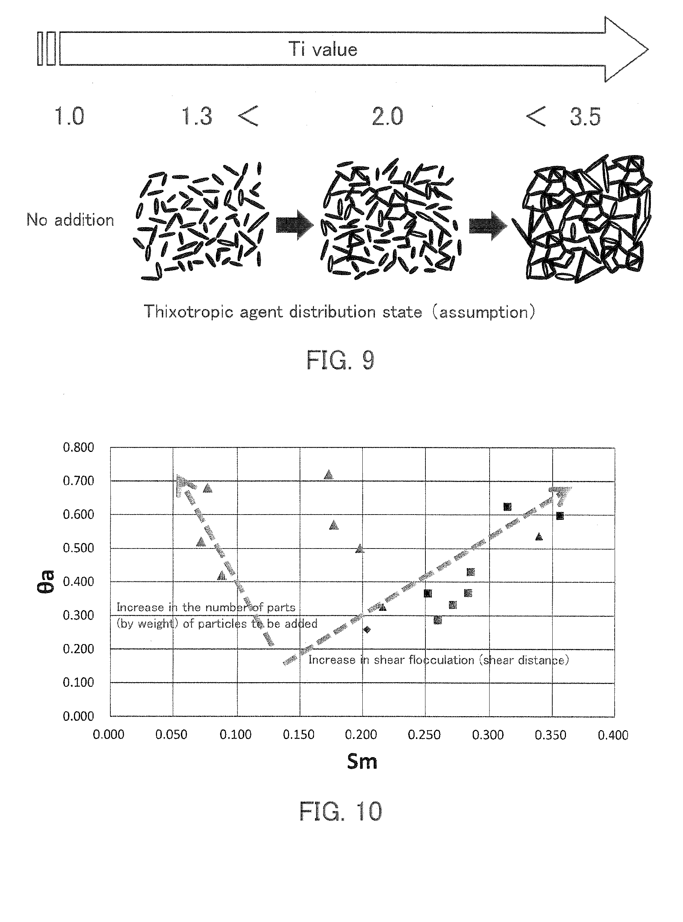

A schematic view of FIG. 9 shows the relationship between the Ti value of a coating solution and the assumable distribution of thixotropy-imparting agents in the method for producing an anti-glare film. As shown in FIG. 9, when the Ti value is less than 1.3, it is assumed that the thixotropy-imparting agents are thinly distributed, and in some cases, a defect in outward appearance is prone to be generated, and characteristics of anti-glare properties and white blur are deteriorated as mentioned above. When the Ti value exceeds 3.5, it is assumed that the thixotropy-imparting agents become dense even though an anti-settling effect is improved, so that the particles are less prone to be flocculated and are prone to be in the dispersed state as mentioned above. In contrast, when the Ti value is in the range from 1.3 to 3.5, it is assumed that the thixotropy-imparting agents can appropriately be in the distributed state, so that the particles can be suitably flocculated. Note here that the distributed state of the thixotropy-imparting agents shown in FIG. 9 is a mere assumption, and the present invention is not at all limited by this assumption.

(3) Step of forming coating layer

In the present invention, a surface profile of the anti-glare film can be freely controlled by adjusting the shear distance S of the coating layer, defined by the following equation (I) when a coating layer is formed by coating the coating solution on at least one surface of the translucent base. The shear distance S of the coating layer is preferably in the range from $0.005 \times 10^{-9}$ to $120 \times 10^{-9}$ m. The shear distance S is more preferably from $0.005 \times 10^{-9}$ to $60 \times 10^{-9}$ m, yet more preferably from $0.01 \times 10^{-9}$ to $15 \times 10^{-9}$ m. In the case where the coating solution contains thixotropy-imparting agents, in order to further improve a white blur preventive effect, the shear distance S is more preferably in the range from $0.5 \times 10^{-9}$ to $8.0 \times 10^{-9}$ m, yet more preferably from $0.5 \times 10^{-9}$ to $7.5 \times 10^{-9}$ m, and still more preferably from $0.5 \times 10^{-9}$ to $7.0 \times 10^{-9}$ m.

$$S = \int V dt \qquad (I)$$

In the equation (I)
S: shear distance (m)
V: shear velocity (m/s)
t: shear holding time (s), and
the shear velocity V is defined by the following equation (II).

$$V = kah^2/\eta \qquad (II)$$

In the equation (II)
k: specific gravity of coating layer ($kg/m^3$)
a: acceleration ($m/s^2$)
h: thickness of coating layer (m)
$\eta$: viscosity of coating layer (Pa•s)
provided that the acceleration a may change over time or may be constant.

As a method for forming a coating layer by coating the coating solution on the translucent base, a coating method such as a fountain coating method, a die coating method, a spin coating method, a spray coating method, a gravure coating method, a roller coating method, or bar coating method can be used, for example.

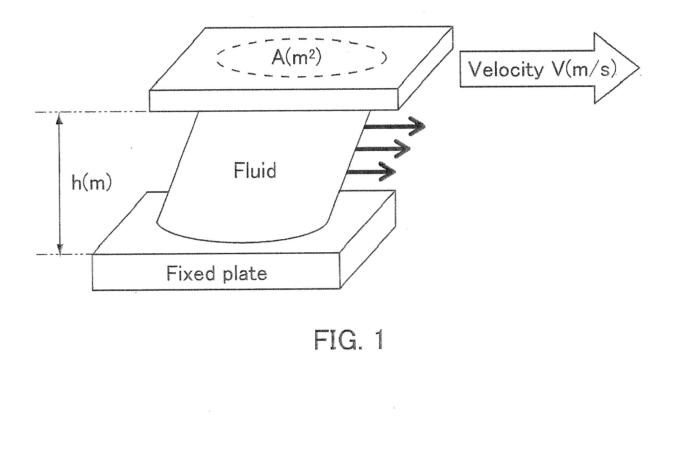

A method for calculating the shear velocity V is described with reference to FIG. 1. For the sake of convenience of description, the acceleration a and the shear velocity V are constant without changing over time in FIG. 1. Assuming that the mass of the fluid shown in FIG. 1 is represented by m (kg), the thickness of the fluid is represented by h (m), and the area of contact between a fixed flat plate and the fluid is represented by A ($m^2$), the velocity (shear velocity) V (m/s) at the upper part of the fluid can be determined by the equation, $V = mah/A\eta$. In the equation, a represents the acceleration ($m/s^2$), and $\eta$ represents the viscosity (Pa•s) of the fluid. The specific gravity k ($kg/m^3$) of the fluid is determined by $k = m/hA$. Thus, $V = mah/A\eta = kah^2/\eta$. Therefore, as mentioned above, the shear velocity V of the coating layer on the translucent base can be defined by the following equation (II),

$$V = kah^2/\eta \qquad (II)$$

k: specific gravity of coating layer ($kg/m^3$)
a: acceleration ($m/s^2$)
h: thickness of coating layer (m)
$\eta$: viscosity of coating layer (Pa•s).

As can be seen from the equation (II), the shear velocity V of the coating layer is increased by (1) increasing the acceleration a, (2) increasing the thickness h of the coating layer, or (3) reducing the viscosity $\eta$ of the coating layer. The increase in shear velocity V of the coating layer causes a difference in movement rate between the resin and the particles in the thickness direction of the coating layer. Therefore, the particles increase opportunities of contacting with each other. Thus, the flocculation of the particles (shear flocculation) occurs. In the present invention, the shear distance S is represented by the following equation (I) as mentioned above. Moreover, in FIG. 1, as mentioned above, the acceleration a and the shear velocity V are constant without changing over time. Thus, the shear distance S is represented by the following equation (I'). As can be seen from the following equations (I) and (I'), the  shear distance S can be increased by increasing the shear velocity V in the method for producing an anti-glare film according to the present invention, assuming that the shear holding time t is constant.

$$S = \int V dt \qquad (I)$$

$$S = V \times t \qquad (I')$$

The shear flocculation is more prone to occur by the use of a coating solution containing thixotropy-imparting agents. In the case of using a coating solution containing no thixotropy-imparting agent, the shear velocity V (velocity when the shear distance S is in the range from $0.005 \times 10^{-9}$ to $120 \times 10^{-9}$ m) of the coating layer is preferably in the range from $0.05 \times 10^{-9}$ to $2.0 \times 10^{-9}$ m/s, more preferably from $0.05 \times 10^{-9}$ to $1.0 \times 10^{-9}$ m/s, yet more preferably from $0.10 \times 10^{-9}$ to $0.25 \times 10^{-9}$ m/s. The specific gravity, the thickness, the viscosity, and the like of the coating layer are influenced by drying of the coating layer. Thus, the shear velocity V is influenced by the drying rate of a solvent. When the drying rate (rate of reducing the thickness of a coating layer) is high, the shear velocity V is reduced, and shear flocculation is less prone to occur. That is, the extent of flocculation can be adjusted by adjusting the drying rate.

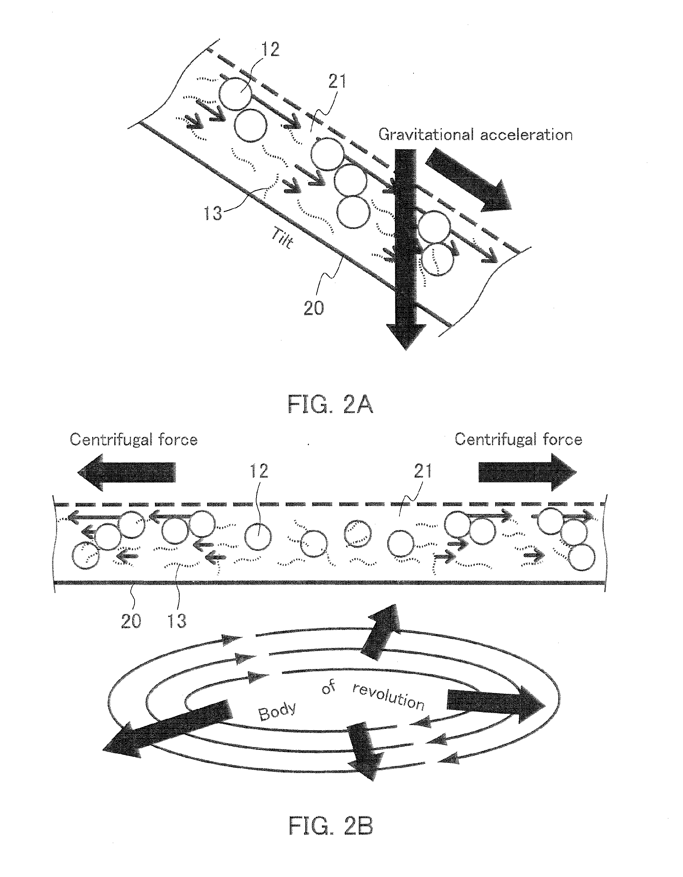

A method for adjusting the shear velocity V of the coating layer is described with reference to FIGs. 2A and 2B. In FIGs. 2A and 2B, the numeral 20 represents a translucent base, the numeral 21 represents a coating layer, the numeral 12 represents particles, and the numeral 13 represents thixotropy-imparting agents. FIG. 2A is an example of increasing the shear velocity V of the coating layer 21 by tilting the translucent base 20. For example, as shown in FIG. 2A, a component along the tilt direction of the gravitational acceleration has the acceleration a by tilting the translucent base 20, so that the shear velocity V of the coating layer 21 can be increased. FIG. 2B is an example of increasing the shear velocity V of the coating layer 21 by rotating the translucent base 20 maintained to be horizontal on a body of revolution. For example, as shown in FIG. 2B, the acceleration a is increased by the centrifugal force caused by rotating the translucent base 20 maintained to be horizontal on a body of revolution, so that the shear velocity V of the coating layer 21 can be increased. The shear velocity V can be maintained to be constant by adjusting the shear velocity V as described above, for example.

It is preferred that the shear holding time t (time at the shear distance S in the range from $0.005 \times 10^{-9}$ to $120 \times 10^{-9}$ m) is set in the range from 0.1 to 60 s. In the case where a coating solution containing thixotropy-imparting agents is used, the shear holding time t is preferably 1 second or more. In the case where a coating solution contains no thixotropy-imparting agent, the shear holding time t is preferably 30 seconds or more. By setting the shear holding time to 30 seconds or more, the shear flocculation is more prone to occur. The shear holding time is more preferably 60 seconds or more. In the case of using a coating solution containing thixotropy-imparting agents, in order to further prevent white blur from occurring, the shear holding time t may be short time (30 seconds or less) even through it depends on the shear velocity. The present invention, however, is not limited by this, and in the case where a coating solution containing thixotropy-imparting agents is used, the shear holding time t may be 30 seconds or in excess of 30 seconds.

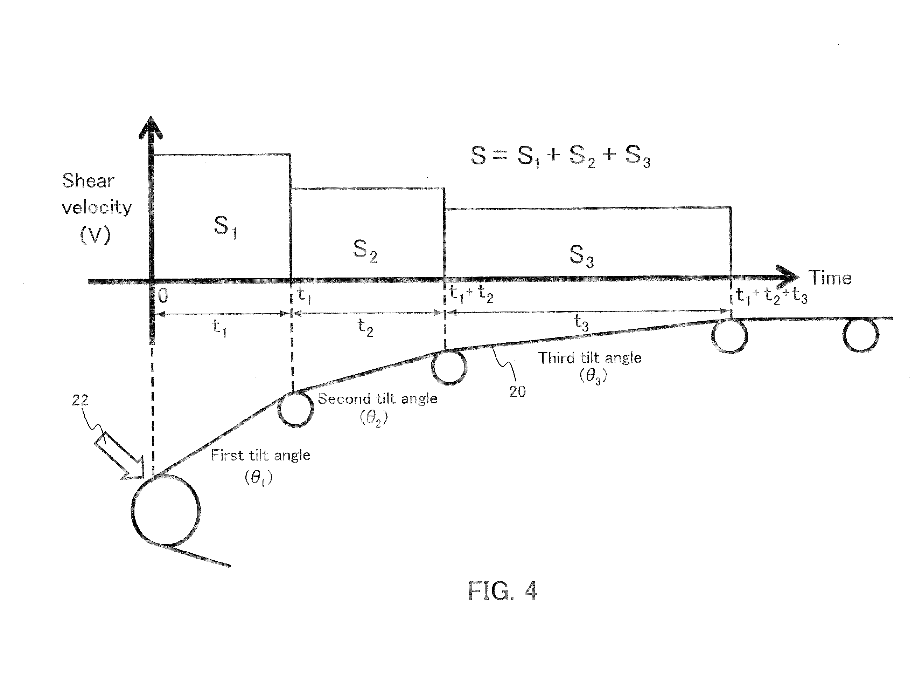

As described above, by adjusting at least one of the shear velocity V and the shear holding time t, the shear distance S can be adjusted. In the present invention, the shear flocculation of the particles is caused to occur not merely by tilting a translucent base the predetermined degrees as in the method for producing an anti-glare film described in JP 2010-102291 A and JP 2010-54737 A, but by adjusting (controlling) the shear distance S calculated from the shear velocity V and the shear holding time t, so that the above-mentioned effects of the present invention can be obtained. The above description was made with reference to the case where the shear velocity V is constant. The present invention, however, is not limited by this example. In the step of forming a coating layer, the shear velocity V may change as appropriate over time as mentioned above, for example. More specifically, for example, as shown in FIG. 4, in the step of forming a coating layer, the shear velocity V may change from the shear velocity $V_1$ (in the shear holding time $t_1$) to the shear velocity $V_2$ (in the shear holding time $t_2$) and may further change to the shear velocity $V_3$ (in the shear holding time $t_3$). In this case, for example, the shear distance S is calculated by the sum ($S = S_1 + S_2 + S_3$) of shear distances at the respective shear velocities, i.e., the shear distance $S_1$ ($V_1 \times t_1$), the shear distance $S_2$ ($V_2 \times t_2$), and the shear distance $S_3$ ($V_3 \times t_3$). In FIG. 4, a coating solution 22 is coated on a translucent base 20 at the left side of FIG. 4 with a transfer of the translucent base 20 from the left side to the right side of FIG. 4 on a coating line. Then a tilt angle at the time of the transfer of the translucent base 20 changes from the first tilt angle $\theta_1$ to the second tilt angle $\theta_2$ and further changes to the third tilt angle $\theta_3$, so that the acceleration a changes. Thus, the shear velocity V changes as mentioned above.

(4) Step of forming anti-glare layer

Next, an anti-glare layer is formed by curing the coating layer. It is preferred that the coating layer is dried (a solvent is removed) prior to the curing. The drying may be, for example, natural drying, air drying by blowing air, heat drying, or a combination thereof.

The way of curing the coating layer is not particularly limited and is preferably ultraviolet curing. The amount of irradiation with the energy radiation source is preferably from 50 to 500 mJ/cm$^2$ in terms of accumulative exposure at the ultraviolet wavelength of 365 nm. With the amount of irradiation of at least 50 mJ/cm$^2$, the coating layer is cured more sufficiently, and the resultant anti-glare layer has a more sufficient hardness. Moreover, with the amount of irradiation of 500 mJ/cm$^2$ or less, the resultant anti-glare layer can be prevented from being colored.

The thickness (d) of the anti-glare layer is not particularly limited and is preferably in the range from 3 to 12 $\mu$m. The anti-glare film can be prevented from warping by setting the thickness (d) of the anti-glare layer in the above-described range, resulting in avoidance of a problem of reduction in productivity such as a failure at the time of transportation, for example. Moreover, when the thickness (d) is in the above-described range, the weight-average particle size (D) of the particles is preferably in the range from 2.5 to 10 $\mu$m as mentioned above. With the above-mentioned combination of the thickness (d) of the anti-glare layer and the weight-average particle size (D) of the particles, the anti-glare film can have further superior anti-glare properties. The thickness (d) of the anti-glare layer is more preferably from 3 to 8 $\mu$m.

The relationship between the thickness (d) of the anti-glare layer and the weight-average particle size (D) of the particles preferably is $0.3 \leq D/d \leq 0.9$. With such relationship, the anti-glare film can have further superior anti-glare properties, can prevent white blur from occurring, and can have no defect in outward appearance.

By forming the anti-glare layer on at least one surface of the translucent base as described above, an anti-glare film can be produced.

(5) Anti-glare film

As mentioned above, it is preferred that, in the anti-glare film according to the present invention, the anti-glare layer includes flocculated portions forming convex portions on a surface of the anti-glare layer by flocculating the particles, and in the flocculated portions, the particles are present in the state of being gathered in one direction in an in-plane direction of the anti-glare layer. Thus, the convex portions can be further gradual convex portions. By including convex portions in such shape in the anti-glare layer, anti-glare properties of the anti-glare film can be maintained, white blur can be prevented from occurring, and a defect in outward appearance can be less prone to occur.

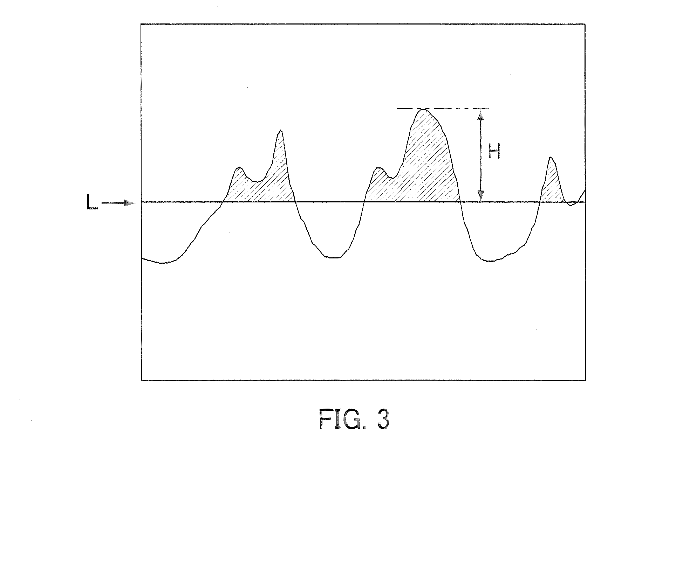

In the anti-glare film according to the present invention, the height of each convex portion from the roughness mean line of the anti-glare layer is preferably less than 0.4 times, more preferably in the range of 0.01 or more to less than 0.4 times, yet more preferably 0.01 or more to less than 0.3 times, the thickness of the anti-glare layer. With the height of each convex portion in the above-described range, formation of a projection as a defect in outward appearance in each convex portion can be suitably prevented. When the anti-glare film according to the present invention includes convex portions with such height, a defect in outward appearance can be less prone to occur. The height from the mean line is described with reference to FIG. 3. FIG. 3 is a schematic view of a two-dimensional profile of a cross section of the anti-glare layer, where the straight line L indicates a roughness mean line (center line) in the two-dimensional profile. The height H from the roughness mean line to the top (of the convex portion) in the two-dimensional profile is the height of the convex portion in the present invention. In FIG. 3, a part of the convex portion, crossing the mean line is indicated by oblique hatching. The thickness of the anti-glare layer is calculated by measuring the overall thickness of the anti-glare film and subtracting the thickness of the translucent base from the overall thickness. The overall thickness and the thickness of the translucent base can be measured using a microgauge-type thickness gauge, for example.

When the translucent base in the anti-glare film according to the present invention is formed of a resin or the like, it is preferred that there is a permeable layer at the interface between the translucent base and the anti-glare layer. The permeable layer is formed by permeating a resin component contained in the anti-glare layer-forming material through the translucent base. When the permeable layer is formed, adhesion between the translucent base and the anti-glare layer can be improved, which is preferable. The thickness of the permeable layer is preferably in the range from 0.2 to 3 $\mu$m, more preferably from 0.5 to 2 $\mu$m. For example, when the translucent base is triacetylcellulose, and the resin contained in the anti-glare layer is an acrylic resin, the permeable layer can be formed. The permeable layer can be checked, and the thickness thereof can be measured, by observing a cross section of the anti-glare film using a transmission electron microscope (TEM), for example.

Even when the method for producing an anti-glare film according to the present invention is applied to an anti-glare film including such permeable layer, a surface profile of the anti-glare film can be widely and freely controlled. For example, according to the method for producing an anti-glare film of the present invention, desired surface asperities with gradual convex portions achieving both of having anti-glare properties and preventing white blur from occurring can be easily formed as mentioned above. When the translucent base has poor adhesion with the anti-glare layer, it is preferred that the permeable layer is formed so as to be thick in order to improve the adhesion.

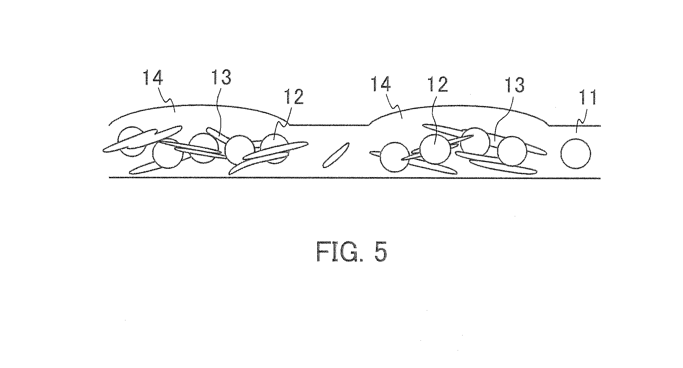

FIG. 5 schematically shows a configuration of an example of the anti-glare film according to the present invention. FIG. 5 is a mere example and does not limit the present invention. FIG. 5 shows an example of the case where the anti-glare film according to the present invention contains thixotropy-imparting agents. As shown in FIG. 5, particles 12 and thixotropy-imparting agents 13 are flocculated in an anti-glare layer 11, so that convex portions 14 are formed on the surface of the anti-glare layer 11. The flocculation state of the particles 12 and the thixotropy-imparting agents 13 is not particularly limited, and the thixotropy-imparting agents 13 are prone to be present at least around the particles 12. In flocculated portions forming the convex portions 14, particles 12 are present in the state of being gathered in one direction in an in-plane direction of the anti-glare layer 11. Thus, the convex portions 14 become gradual convex portions.

It is assumed that the above-mentioned gradual convex portions are formed by the following mechanism. The present invention, however, is not at all limited by this assumption.

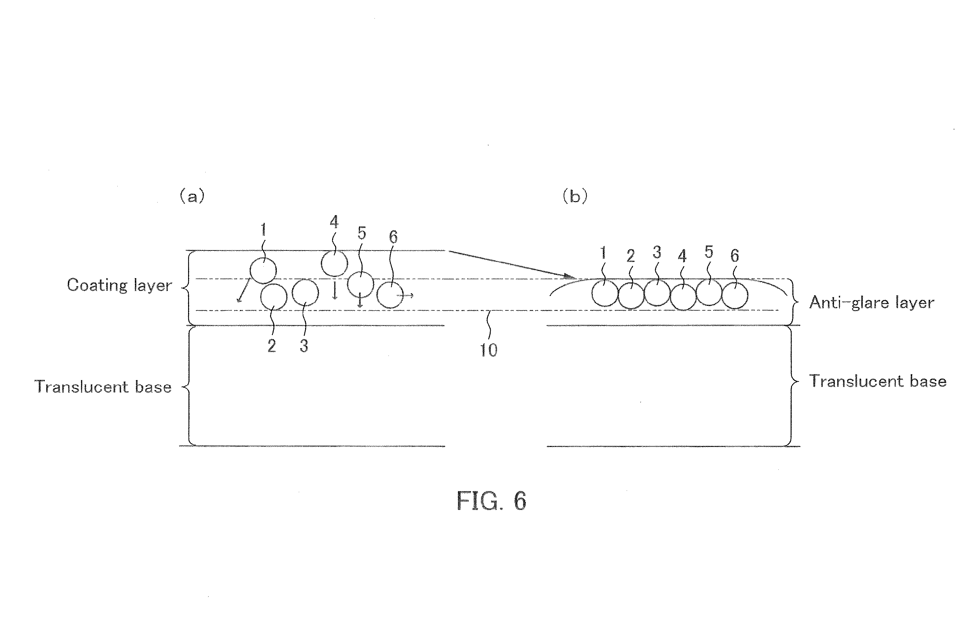

FIG. 6 is a diagram schematically showing the state of a cross section in the thickness direction of the anti-glare film according to the present invention, viewed from a side surface in order to illustrate a mechanism of the flocculation state in the anti-glare layer of the anti-glare film according to the present invention. In FIG. 6, (a) shows the state of forming a coating layer by coating the coating solution containing a solvent to a translucent base, and (b) shows the state of the anti-glare layer formed by removing the solvent from the coating layer and curing a coating layer.

The mechanism of forming the above-mentioned gradual convex portions is described below with reference to FIG. 6. As shown in (a) and (b) of FIG. 6, the thickness of the coating layer is shrunk (reduced) by removing the solvent contained in the coating layer. The lower surface side (back surface side) of the coating layer is terminated by the translucent base, and thus the coating layer is shrunk from the upper surface side (the front surface side) of the coating layer. Particles (e.g., particles 1, 4, and 5) present in a portion from which the thickness of the coating layer is reduced in (a) of FIG. 6 are prone to move to the lower surface side of the coating layer by the reduction in thickness. On the other hand, a movement, to the lower surface side, of particles (e.g., particles 2, 3, and 6) present in a position relatively lower on the lower surface side, which is not affected or is less prone to be affected by the change in the thickness is suppressed by an anti-settling effect (thixotropic effect) of the thixotropy-imparting agents contained in the coating solution (e.g., the particles do not move to the side lower than the double-dashed chain line 10). Therefore, even when the coating layer is shrunk, the particles (particles 2, 3, and 6) on the lower surface side remain in almost the same position without being pushed toward the lower side (back surface side) by the particles (particles 1, 4, and 5) moving from the front surface side. Since the particles (particles 2, 3, and 6) on the lower surface side remain in almost the same position, the particles (particles 1, 4, and 5) moving from the front surface side move to positions beside the particles on the lower surface side (in an in-plane direction of the coating layer) in which the particles on the lower surface side are not present.

It is assumed that the particles in the anti-glare layer of the anti-glare film according to the present invention are present in the state of gathering in an in-plane direction of the anti-glare layer as described above.

The particles in the anti-glare layer are flocculated in an in-plane direction of the anti-glare layer as described above, so that the convex portions become gradual convex portions as shown in FIG. 6. Moreover, when the anti-glare layer contains thixotropy-imparting agents having an anti-settling effect, the excess flocculation of the particles in the thickness direction of the anti-glare layer is avoided. Thus, formation of a projection as a defect in outward appearance on the surface of the anti-glare layer can be prevented.

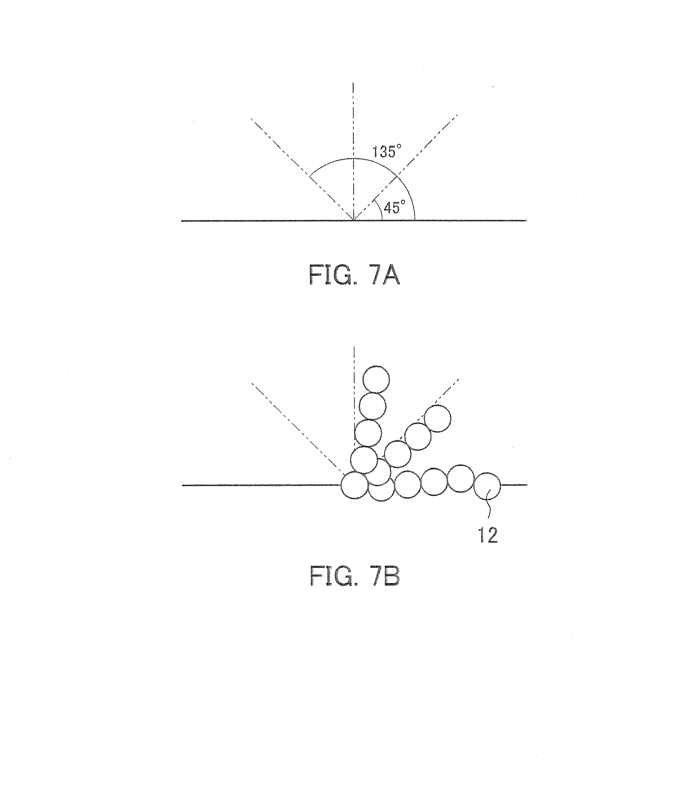

The convex portions in the anti-glare film according to the present invention may be gradual convex portions which can prevent generation of the projection as a defect in outward appearance on the surface of the anti-glare layer, and the present invention, however, is not limited by this. Some of the particles may be present in positions in which the particles directly or indirectly overlap in the thickness direction of the anti-glare layer, for example. In the case where the overlap of the particles is represented by the number of overlapping particles, the "thickness direction" of the anti-glare layer is, for example, as shown in the schematic views of FIG. 7A and 7B, a direction in a range from 45° to 135° of an angle with the in-plane direction of the translucent base (in-plane direction of the anti-glare layer). When the thickness (d) of the antiglare layer is in the range from 3 to 12 $\mu$m, the particle size (D) of the particles is in the range from 2.5 to 10 $\mu$m, and a relationship between the thickness (d) and the particle size (D) is $0.3 \leq D/d \leq 0.9$, the number of overlapping particles in the thickness direction of the anti-glare layer is preferably 4 or less, more preferably 3 or less, for example.

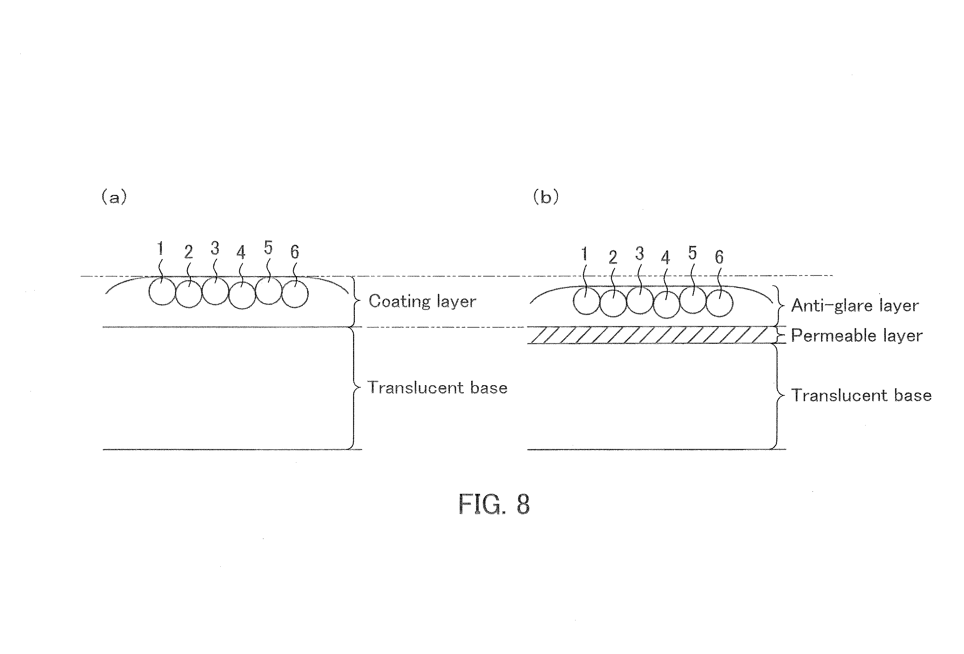

Next, the case where the above-mentioned permeable layer is formed between the translucent base and the anti-glare layer in the above-mentioned assumable mechanism is described with reference to the diagram of FIG. 8. In FIG. 8, (a) shows the state of the middle of forming an anti-glare layer by removing a solvent from a coating layer, and (b) shows the state of the anti-glare layer formed by removing a solvent from a coating layer. In FIG. 8, the permeable layer is indicated by oblique hatching. Note here that the present invention is not at all limited by the following description.

As shown in (a) and (b) of FIG. 8, the thickness of a coating layer is shrunk (reduced) by removing a solvent contained in the coating layer. Thus, an anti-glare layer is formed. Then, a resin contained in a coating solution is permeated through a translucent base with the formation of the anti-glare layer. Thus, a permeable layer is formed between the anti-glare layer and the translucent base. As shown in (a) of FIG. 8, before the permeable layer is formed, the particles are prone to be present in the state of being apart from the translucent base without being in contact with the translucent base by the anti-settling effect of the thixotropy-imparting agents. Then, when the permeable layer is formed, the resin on the translucent base side, i.e., the resin on the lower side of the particles (translucent base side) is mainly permeated through the permeable layer. Thus, in the present invention, following the permeation of the resin through the translucent base, a group of particles flocculated in the in-plane direction of the anti-glare layer and the resin covering them move together to the translucent base side. That is, they move to the translucent base side as shown in (b) of FIG. 8 while maintaining the flocculation state of the particles shown in (a) of FIG. 8. Thus, the group of particles and the resin covering them on the front surface side of the anti-glare layer move as if falling down to the translucent base side as a whole while maintaining the surface profile. Thus, it is assumed that the surface profile of the anti-glare layer of the anti-glare film according to the present invention is less prone to change.

Moreover, it is assumed that in the case where the coating solution has thixotropy (thixotropic properties) by the thixotropy-imparting agents in the present invention, the resin composing a convex portion by covering a group of particles is less prone to move to the transparent base side even when the permeable layer is formed so as to be thick.

Combined with such effect, it is assumed that the surface profile of the anti-glare layer is less prone to change in the anti-glare film according to the present invention.

It is preferred that in the anti-glare layer of the anti-glare film according to the present invention, the number of defects in outward appearance having the maximum diameter of 200 $\mu$m or more is 1 or less per 1 m$^2$ of the anti-glare layer. It is more preferred that the anti-glare layer does not have any defect in outward appearance.

The haze value of the anti-glare film according to the present invention is preferably in the range from 0% to 10%. The haze value is a haze value (cloudiness) of the entire anti-glare film according to JIS K 7136 (2000 version). The haze value is more preferably from 0% to 5%, yet more preferably from 0% to 3%. In order to make the haze value be in the above-described range, it is preferred that the particles and the resin are selected so that the difference in refractive index between the particles and the resin is in the range from 0.001 to 0.02. When the haze value is in the above-described range, a sharp image can be obtained, and a contrast in dark place can be improved.

The arithmetic average surface roughness Ra defined in JIS B 0601 (1994 version) of the surface asperities of the anti-glare layer of the anti-glare film according to the present invention is preferably in the range from 0.01 to 0.3 $\mu$m, more preferably from 0.02 to 0.2 $\mu$m. In order to prevent reflected glare of external light and an image from occurring on the surface of the anti-glare film, the surface preferably has roughness to some extent. When Ra is 0.01 $\mu$m or more, the reflected glare can be ameliorated. When Ra is in the above-described range, scattering of reflected light when viewed from oblique directions is suppressed, white blur can be ameliorated, and a contrast in bright place can be improved in the case of using the anti-glare layer in an image display or the like.

The average convex-to-convex distance Sm (mm) of the surface asperities, measured according to JIS B 0601 (1994 version) is preferably in the range from 0.05 to 0.4, more preferably from 0.08 to 0.3. When Sm is in the above-described range, the anti-glare film can have further superior anti-glare properties and can prevent white blur from occurring, for example.

The average tilt angle $\theta$a (°) of the surface asperities of the anti-glare layer of the anti-glare film according to the present invention is preferably in the range from 0.1 to 1.5, more preferably from 0.2 to 1.0. The average tilt angle $\theta$a is a value defined by the following mathematical equation (1). The average tilt angle $\theta$a is a value measured by the method described below in the section of Examples, for example.

$$\text{Average tilt angle } \theta a = \tan^{-1}\Delta a \qquad (1)$$

In the mathematical equation (1), as shown in the following mathematical equation (2), $\Delta$a denotes a value obtained by dividing the sum (h1 + h2 + h3 ... + hn) of the differences (heights h) between adjacent peaks and the lowest point of the trough formed therebetween by the standard length L of the roughness curve defined in JIS B 0601 (1994 version). The roughness curve is a curve obtained by removing the surface waviness components with longer wavelengths than the predetermined one from the profile curve using a retardation compensation high-pass filter. The profile curve denotes a profile that appears at the cut surface when an object surface was cut in a plane perpendicular to the object surface.

$$\Delta a = (h1 + h2 + h3 \cdots + hn)/L \qquad (2)$$

For example, when all of Ra, Sm, and $\theta$a are in the above described ranges, the anti-glare film can have further superior anti-glare properties and can prevent white blur from occurring. The method for producing an anti-glare film according to the present invention can adjust the surface profile of the anti-glare film by adjusting the shear distance of the coating layer in the step of shearing as mentioned above. Thus, Ra, Sm, and $\theta$a can be widely and freely adjusted. Moreover, it is preferred that the surface profile of the anti-glare film can be adjusted by further adjusting the number of parts by weight of the particles relative to 100 parts by weight of the resin in the coating solution. Thus, for example, Ra, Sm, and $\theta$a can be adjusted further widely and freely.

A graph of FIG. 10 schematically shows an example of the surface profile control of the anti-glare film by the shear distance and the number of parts by weight of the particles in the method for producing an anti-glare film according to the present invention. As shown in FIG. 10, when the shear distance is increased, the average convex-to-convex distance Sm and the average tilt angle $\theta$a are increased. When the number of parts of the particles to be added (the number of parts by weight of the particles relative to 100 parts by weight of the resin) is increased, the average convex-to-convex distance Sm is reduced, and the average tilt angle $\theta$a is increased. FIG. 10, however, is a mere example, and the present invention is not limited thereby.

It is preferred that the anti-glare film according to the present invention has the hardness of 2H or more in terms of pencil hardness although it is influenced by the thickness of the layer.

The anti-glare film according to the present invention can be, for example, the one obtained by forming an anti-glare layer on one surface of a transparent plastic film base. The anti-glare layer contains particles, and thus, the anti-glare layer has surface asperities. In this example, the anti-glare layer is formed on one surface of the transparent plastic film base, and the present invention, however, is not limited by this. The anti-glare film may be the one obtained by forming anti-glare layers on both surfaces of the transparent plastic film base. In this example, the anti-glare layer is a monolayer, and the present invention, however, is not limited by this. The anti-glare layer may have a multilayer structure obtained by laminating two or more layers.

In the anti-glare film according to the present invention, an antireflection layer (low refractive index layer) may be placed on the anti-glare layer. For example, in the case where the anti-glare film is attached to an image display, a light reflection at the interface between air and the anti-glare layer is one of the factors of reducing visibility of images. The antireflection layer reduces the surface reflection. The anti-glare layer and the antireflection layer may be formed on each of both surfaces of the transparent plastic film base. Furthermore, each of the anti-glare layer and the antireflection layer may have a multilayer structure obtained by laminating two or more layers.

In the present invention, the antireflection layer is a thin optical film whose thickness and refractive index are controlled strictly or the one including two or more of the thin optical films laminated together. The antireflection layer uses the interference effect of light to cancel opposite phases of incident light and reflected light and thereby exhibits an antireflection function. The wavelength range of visible light that allows the antireflection function to be exhibited is, for example, from 380 to 780 nm, the wavelength range in which particularly high visibility is obtained is in the range of 450 to 650 nm, and preferably, the antireflection layer is designed so that the reflectance at 550 nm, which is the center wavelength, is minimized.

When the antireflection layer is designed based on the effect of interference of light, the interference effect can be enhanced by, for example, a method of increasing the difference in refractive index between the antireflection layer and the anti-glare layer. Generally, in an antireflection multilayer having a structure including two to five thin optical layers (each with strictly controlled thickness and refractive index) that are laminated together, components with different refractive indices from each other are used to form a plurality of layers with a predetermined thickness. Thus, the antireflection layer can be designed at a higher degree of freedom, the antireflection effect can be improved, and the spectral reflection characteristics also can be made uniform (flat) in the visible light range. Since each layer of the thin optical film must be highly precise in thickness, a dry process such as vacuum deposition, sputtering, or CVD is generally used to form each layer.

Further, it is preferred that a contamination preventive film formed of a silane compound having a fluorine group, an organic compound having a fluorine group, or the like is laminated on the antireflection layer in order to prevent adhesion of contaminant and improve removability of adherent contaminant.

In anti-glare film according to the present invention, it is preferred that at least one of the translucent base and the anti-glare layer is subjected to a surface treatment. When the translucent base is subjected to a surface treatment, adhesion to the anti-glare layer, or a polarizer or a polarizing plate can be further improved. When the anti-glare layer is subjected to a surface treatment, adhesion to the antireflection layer, or a polarizer or a polarizing plate can be further improved.

In the anti-glare film in which the anti-glare layer is formed on one surface of the translucent base, the other surface of the translucent base may be subjected to a solvent treatment in order to prevent the film from warping. Alternatively, in the anti-glare film in which the anti-glare layer is formed on one surface of the translucent base, a transparent resin layer may be formed on the other surface of the translucent base in order to prevent the film from warping.

The translucent base side of the anti-glare film obtained in the present invention can be attached to an optical element used in LCD via a pressure-sensitive adhesive or an adhesive. In order to perform the attachment, the translucent base may be subjected to any of the above-mentioned surface treatments.

The optical element can be, for example, a polarizer or a polarizing plate, for example. The polarizing plate is generally configured so that a transparent protective film is laminated on one or both surfaces of the polarizer. When a transparent protective film is provided on both surfaces of the polarizer, the front and back transparent protective films may be formed of the same material or different materials. Polarizing plates are generally placed on both sides of a liquid crystal cell and is placed so that the absorption axes of two polarizing plates are substantially orthogonal to each other.

(6) Polarizing plate

Next, an optical element including the anti-glare film laminated thereon is described with reference to a polarizing plate as an example. According to the method for producing an anti-glare film of the present invention, the surface profile of the anti-glare film can be widely and freely controlled as mentioned above. Thus, the optical characteristics obtainable by laminating the anti-glare film on a polarizer or a polarizing plate using an adhesive or a pressure-sensitive adhesive is compatible in a wide range of the surface profile of the anti-glare film. For example, by laminating the anti-glare film produced by the method for producing an anti-glare film according to the present invention under the predetermined conditions on a polarizer or a polarizing plate using an adhesive, a pressure-sensitive adhesive, or the like, a polarizing plate having superior display characteristics of having anti-glare properties and preventing white blur from occurring and preventing generation of a defect in outward appearance can be obtained.

The polarizer is not particularly limited and various kinds can be used. Examples of the polarizer include: a film that is uniaxially stretched after a hydrophilic polymer film, such as a polyvinyl alcohol type film, a partially formalized polyvinyl alcohol type film, or an ethylene-vinyl acetate copolymer type partially saponified film, is allowed to adsorb dichromatic substances such as iodine or a dichromatic dye; and a polyene type oriented film, such as a dehydrated polyvinyl alcohol film or a dehydrochlorinated polyvinyl chloride film.

Preferably, the transparent protective film formed on one or both surfaces of the polarizer is superior in, for example, transparency, mechanical strength, thermal stability, moisture-blocking properties, and retardation value stability. Examples of the material for forming the transparent protective film include the same materials as those used for the aforementioned transparent plastic film substrate.

Moreover, the polymer films described in JP 2001-343529 A (WO 01/37007) also can be used as the transparent protective film. The polymer film can be produced by extruding the resin composition in the form of a film. The polymer film has a small retardation and a small photoelastic coefficient and thus can eliminate defects such as unevenness due to distortion when it is used for a protective film of, for example, a polarizing plate. The polymer film also has low moisture permeability and thus has high durability against moisture.

From the viewpoints of polarizing characteristics and durability, the transparent protective film is preferably a film made of cellulose resin such as triacetyl cellulose or a film made of norbornene resin. Examples of commercially available products of the transparent protective film include FUJITAC (trade name) (produced by Fujifilm Corporation), ZEONOA (trade name) (produced by Nippon Zeon Co., Ltd.), andARTON (trade name) (produced by JSR Corporation). The thickness of the transparent protective film is not particularly limited. It can be, for example, in the range of 1 to 500 $\mu$m from the viewpoints of strength, workability such as handling properties, and thin layer properties.

The configuration of the polarizing plate on which the anti-glare film has been laminated is not particularly limited and may be, for example, a configuration obtained by laminating a transparent protective film, the polarizer, and the transparent protective film on the anti-glare film in this order or a configuration obtained by laminating the polarizer and the transparent protective film on the anti-glare film in this order.

(7) Image display

The configuration of the image display according to the present invention is the same as that of the conventional image display except that the anti-glare film according to the present invention is used. For example, in the case of a LCD, the image display can be produced by incorporating a driving circuit through appropriately assembling components such as a liquid crystal cell, an optical element such as a polarizing plate, and if necessary, a lighting system (backlight or the like), a black matrix pattern, or the like.

In the image display according to the present invention, as mentioned above, the anti-glare film according to the present invention is placed so that the one direction in which the particles are gathered coincides with a longitudinal direction of the black matrix pattern. The anti-glare film according to the present invention, placed as described above preferably has anisotropy. Thus, an image display having superior anti-glare properties, less glare, and a small reduction in contrast even though surface asperities of an anti-glare film are easily formed by flocculation of particles can be obtained.

The image display according to the present invention may be used for any suitable applications. Examples of the applications include office automation equipment such as a PC monitor, a notebook PC, and a copy machine, portable devices such as a mobile phone, a watch, a digital camera, a personal digital assistant (PDA), and a handheld game machine, home electric appliances such as a video camera, a television set, and a microwave oven, vehicle equipment such as a back monitor, a monitor for a car-navigation system, and a car audio device, display equipment such as an information monitor for stores, security equipment such as a surveillance monitor, and nursing and medical equipment such as a monitor for nursing care and a monitor for medical use.

Examples

Next, the examples of the present invention are described together with the reference examples. The present invention, however, is not limited by the examples and the reference examples. Various characteristics in the examples and the reference examples were evaluated or measured by the following methods.

(Specific gravity k (kg/m$^3$) of coating layer)

100 ml of a coating solution was provided, and the weight thereof was measured and was used as a specific gravity of a coating layer.

(Acceleration a (m/s$^2$))

The acceleration was calculated according to the following equation using a tilt angle of θ,

$$a = \text{gravity acceleration} \ (9.8 \ \text{m/s}^2) \times \sin\theta.$$

(Thickness h (m) of coating layer)

An non-contact interference thickness measurement was performed using "MCPD3750" produced by Otsuka Electronics Co., Ltd. The refractive index of the coating layer was 1.5.

(Viscosity η (Pa • s) of coating layer)

A viscosity at the shear velocity of 200 (1/s) was measured using RHEOSTRESS RS6000 produced by HAAKE.

(Measurement of surface profile)

A glass sheet (with a thickness of 1.3 mm) produced by Matsunami Glass Ind., Ltd. was attached to a surface of an anti-glare film on which no anti-glare layer had been formed, with a pressure-sensitive adhesive. Subsequently, the surface profile of the anti-glare layer was measured under the condition where a cutoff value was 0.8 mm using a high-precision microfigure measuring instrument (SURFCORDER ET4000 (trade name), produced by Kosaka Laboratory Ltd.), and the arithmetic average surface roughness Ra, the average convex-to-convex distance Sm, and the average tilt angle θa were then determined. The high-precision microfigure measuring instrument automatically calculated the arithmetic average surface roughness Ra and the average tilt angle θa. The arithmetic average surface roughness Ra and the average tilt angle θa were based on JIS B 0601 (1994 version). The average convex-to-convex distance Sm was an average convex-to-convex distance (mm) on the surface, measured according to JIS B 0601 (1994 version).

(Anti-glare property evaluation)

(1) A black acrylic plate (with a thickness of 2.0 mm, produced by Mitsubishi Rayon Co., Ltd.) was attached to a surface of the anti-glare film on which no anti-glare layer had been formed, with a pressure-sensitive adhesive. Thus, a sample having a back surface with no reflection was produced.

(2) In an office environment (about 1000 Lx) where displays are used in general, the sample was illuminated by a fluorescent lamp (three wavelength light source), and anti-glare properties of the sample produced above were evaluated by visual check according to the following criteria:

Evaluation criteria:

G: anti-glare properties are superior, and no reflected glare of an image of the outline of the fluorescent lamp remains

NG: anti-glare properties are inferior, and reflected glare of an image of the outline of the fluorescent lamp remains.

(White blur evaluation and appearance)

(1) A black acrylic plate (with a thickness of 1.0 mm, produced by Nitto Jushi Kogyo Kabushiki Kaisha) was attached to the surface of an antiglare film on which no antiglare layer had been formed, with a pressure-sensitive adhesive. Thus, a sample having a back surface with no reflection was produced.

(2) In an office environment (about 1000 Lx) where displays are used in general, the white blur phenomenon was observed by visual check by viewing the display from the direction that forms an angle of 60° with the reference (0°) that is the direction perpendicular to the plane of the sample thus produced. Then evaluation was made according to the following criteria:

Evaluation Criteria (white blur):

AA: white blur is hardly observed
A: white blur is observed but has a small effect on visibility
B : white blur is observed but has no practical problem
-: unevaluable (because of no anti-glare properties and almost clear display).

(3) Moreover, a comprehensive appearance including prevention of white blur of an anti-glare film was determined as follows by visual check. An anti-glare film having a particularly high white blur suppression (preventive) effect had an appearance of sharp black (Jet Black). This was determined as the following "J".
Evaluation Criteria (Appearance):

J: an appearance preventing white blur from occurring (sharp black) and having anti-glare properties
M: an appearance of having matte and anti-glare properties
*: asperities are high and anti-glare properties are really intense, so that the anti-glare film does not fall under any of J and M.
-: unevaluable (because of no anti-glare properties and almost clear display)

(Weight-average particle size of fine particles)

By the Coulter counting method, the weight average particle size of the fine particles was measured. Specifically, a particle size distribution measurement apparatus (COULTER MULTISIZER (trade name), produced by Beckman Coulter, Inc.) using a pore electrical resistance method was employed to measure an electrical resistance of an electrolyte corresponding to the volume of the fine particles when the fine particles passed through the pores. Thus, the number and volume of fine particles were measured and then the weight average particle size was calculated.

(Thickness of anti-glare layer)

The overall thickness of an anti-glare film was measured using a microgauge type thickness gauge produced by Mitutoyo Corporation, and the thickness of an anti-glare layer was calculated by subtracting the thickness of a translucent base from the overall thickness.

(Example 1-1)

As a resin contained in a coating solution, 70 parts by weight of an ultraviolet-curable urethane acrylate resin (produced by Nippon Synthetic Chemical Industry Co., Ltd., "UV1700B" (trade name), with a solid content of 100%) and 30 parts by weight of polyfunctional acrylate containing pentaerythritol triacrylate as a main component (produced by Osaka Organic Chemical Industry Ltd., "BISCOAT #300" (trade name), with a solid content: 100%) were provided. 2 parts by weight of particles of a copolymer of acryl and styrene (produced by Sekisui Plastics Co., Ltd., "TECHPOLYMER" (trade name), with a weight-average particle size: 3.0 $\mu$m and a refractive index: 1.52) as particles, 0.4 parts by weight of synthesized smectite which is organoclay (produced by CO-OP Chemical Co. Ltd., "LUCENTITE SAN" (trade name)) as thixotropy-imparting agents, 3 parts by weight of a photoinitiator (produced by BASF, "IRGACURE 907" (trade name)), and 0.5 parts by weight of a leveling agent (produced by DIC Corporation, "PC4100" (trade name), with a solid content of 10%) were mixed relative to 100 parts by weight of the solid content of the resin. The organoclay was used after diluting it with toluene so as to have a solid content of 6%. This mixture thus obtained was diluted with a toluene/cyclopentanone (CPN) mixed solvent (with a weight ratio of 80/20) so as to have a solid concentration of 50 wt%, which was then subjected to ultrasonic dispersion using an ultrasonic disperser. Thus, a coating solution was prepared.
As a translucent base, a transparent plastic film base (a triacetylcellulose film, produced by Fujifilm Corporation, "FUJITAC" (trade name), with a thickness: 60 $\mu$m and a refractive index: 1.49) was provided. The coating solution was applied to one surface of the transparent plastic film base using a wire bar. Thus, a coating layer was formed. At that time, the transparent plastic film base was tilted as shown in FIG. 2A, and the shear velocity V of the coating layer was set to $0.18 \times 10^{-9}$ m/s (the shear distance S = $5.34 \times 10^{-9}$ m) for 30 seconds. Then, the coating layer was dried by heating it at 90°C for 2 minutes. Thereafter, the coating layer was subjected to a hardening treatment by irradiating it with ultraviolet at the amount of irradiation with a high-pressure mercury lamp of 300 mJ/cm$^2$. Thus, an anti-glare layer with a thickness of 7 $\mu$m was formed, and an anti-glare film of the present example was obtained. The shear distance S was calculated based on the equation (I'), and the shear velocity V was calculated based on the equation (II). Each of the above-described numerical values of the shear distance S and the shear velocity V was obtained by rounding a value calculated based on the equation (I) or (II) off. As the numerical value of shear velocity V in the equation (I'), a numerical value before rounding off was used. Therefore, the above-described numerical value ($5.34 \times 10^{-9}$ m) of the shear distance S does not coincide with the numerical value ($5.4 \times 10^{-9}$ m/s) obtained by multiplying the above-described numerical value ($0.18 \times 10^{-9}$ m/s) of the shear velocity V by 30 seconds. The same applies to the following examples and reference examples.

(Example 1-2)

An anti-glare film of Example 1-2 was obtained in the same manner as in Example 1-1 except that the shear velocity V of the coating layer was set to $0.09 \times 10^{-9}$ m/s (the shear distance S = $2.67 \times 10^{-9}$ m) for 30 seconds.

(Example 1-3)

An anti-glare film of Example 1-3 was obtained in the same manner as in Example 1-1 except that the shear velocity V of the coating layer was set to $0.04 \times 10^{-9}$ m/s (the shear distance S = $1.09 \times 10^{-9}$ m) for 30 seconds.

(Example 2-1)

An anti-glare film of Example 2-1 was obtained in the same manner as in Example 1-1 except that the solid concentration was set to 40 wt%, and the shear velocity V of the coating layer was set to $0.11 \times 10^{-9}$ m/s (the shear distance S = $3.24 \times 10^{-9}$ m) for 30 seconds.

(Example 2-2)

An anti-glare film of Example 2-2 was obtained in the same manner as in Example 2-1 except that the shear velocity V of the coating layer was set to $0.27 \times 10^{-9}$ m/s (the shear distance S = $8.10 \times 10^{-9}$ m) for 30 seconds.

(Example 2-3)

An anti-glare film of Example 2-3 was obtained in the same manner as in Example 2-1 except that the shear velocity V of the coating layer was set to $0.53 \times 10^{-9}$ m/s (the shear distance S = $15.88 \times 10^{-9}$ m) for 30 seconds.

(Example 3-1)

An anti-glare film of Example 3-1 was obtained in the same manner as in Example 1-1 except that the solid concentration was set to 33 wt%, the shear velocity V of the coating layer was set to $0.23 \times 10^{-9}$ m/s (the shear distance S = $6.84 \times 10^{-9}$ m) for 30 seconds, and the anti-glare layer with a thickness of 6.5 $\mu$m was formed.

(Example 3-2)

An anti-glare film of Example 3-2 was obtained in the same manner as in Example 3-1 except that the shear velocity V of the coating layer was set to $0.56 \times 10^{-9}$ m/s (the shear distance S = $16.76 \times 10^{-9}$ m) for 30 seconds.

(Example 3-3)

An anti-glare film of Example 3-3 was obtained in the same manner as in Example 3-1 except that the shear velocity V of the coating layer was set to $1.12 \times 10^{-9}$ m/s (the shear distance S = $33.53 \times 10^{-9}$ m) for 30 seconds.

(Example 4-1)

An anti-glare film of Example 4-1 was obtained in the same manner as in Example 2-1 except that the amount of the particles to be added was set to 7 parts by weight, the thixotropy-imparting agents were not added, the shear velocity V of the coating layer was set to $0.25 \times 10^{-9}$ m/s (the shear distance S = $14.96 \times 10^{-9}$ m) for 60 seconds, a proplyleneglycole monomethylether (PM)//cyclopentanone (CPN) mixed solvent (with the weight ratio 80/20) was used as a solvent for the coating solution as substitute for a toluene/ CPN mixed solvent (with the weight ratio 80/20).

(Example 4-2)

An anti-glare film of Example 4-2 was obtained in the same manner as in Example 4-1 except that the shear velocity V of the coating layer was set to $0.50 \times 10^{-9}$ m/s (the shear distance S = $29.92 \times 10^{-9}$ m) for 60 seconds.

(Example 4-3)

An anti-glare film of Example 4-3 was obtained in the same manner as in Example 4-1 except that the shear velocity V of the coating layer was set to $0.10 \times 10^{-9}$ m/s (the shear distance S = $6.11 \times 10^{-9}$ m) for 60 seconds.

(Example 5-1)

An anti-glare film of Example 5-1 was obtained in the same manner as in Example 4-1 except that the solid concentration was set to 33 wt%, the shear velocity V of the coating layer was set to $0.17 \times 10^{-9}$ m/s (the shear distance S = $10.45 \times 10^{-9}$ m) for 60 seconds, and the anti-glare layer with a thickness of 6.5 $\mu$m was formed.

(Example 5-2)

An anti-glare film of Example 5-2 was obtained in the same manner as in Example 5-1 except that the shear velocity V of the coating layer was set to $0.43 \times 10^{-9}$ m/s (the shear distance S = $25.60 \times 10^{-9}$ m) for 60 seconds.

(Example 5-3)

An anti-glare film of Example 5-3 was obtained in the same manner as in Example 5-1 except that the shear velocity V of the coating layer was set to $0.85 \times 10^{-9}$ m/s (the shear distance S = $51.20 \times 10^{-9}$ m) for 60 seconds.

(Example 6-1)

An anti-glare film of Example 6-1 was obtained in the same manner as in Example 4-1 except that the solid concentration was set to 50 wt%, the shear velocity of the coating layer was set to $0.20 \times 10^{-9}$ m/s (the shear distance S = $12.22 \times 10^{-9}$ m) for 60 seconds.

(Example 6-2)

An anti-glare film of Example 6-2 was obtained in the same manner as in Example 6-1 except that the shear velocity V of the coating layer was set to $0.04 \times 10^{-9}$ m/s (the shear distance S = $2.49 \times 10^{-9}$ m) for 60 seconds.

(Example 6-3)

An anti-glare film of Example 6-3 was obtained in the same manner as in Example 6-1 except that the shear velocity V of the coating layer was set to $0.10 \times 10^{-9}$ m/s (the shear distance S = $6.11 \times 10^{-9}$ m) for 60 seconds.

(Example 7-1)

An anti-glare film of Example 7-1 was obtained in the same manner as in Example 2-1 except that the shear velocity V of the coating layer was set to $0.27 \times 10^{-9}$ m/s (the shear distance S = $0.81 \times 10^{-9}$ m) for 3 seconds.

(Example 7-2)

An anti-glare film of Example 7-2 was obtained in the same manner as in Example 7-1 except that the shear velocity V of the coating layer was set to $0.27 \times 10^{-9}$ m/s (the shear distance S = $1.35 \times 10^{-9}$ m) for 5 seconds.

(Example 7-3)

An anti-glare film of Example 7-3 was obtained in the same manner as in Example 7-1 except that the shear velocity V of the coating layer was set to $0.27 \times 10^{-9}$ m/s (the shear distance S = $2.70 \times 10^{-9}$ m) for 10 seconds.

(Example 7-4)

An anti-glare film of Example 7-4 was obtained in the same manner as in Example 7-1 except that the shear velocity V of the coating layer was set to $0.27 \times 10^{-9}$ m/s (the shear distance S = $8.10 \times 10^{-9}$ m) for 30 seconds.

(Example 7-5)

An anti-glare film of Example 7-5 was obtained in the same manner as in Example 7-3 except that the amount of the particles to be added was set to 5 parts by weight.

(Example 8-1)

An anti-glare film of Example 8-1 was obtained in the same manner as in Example 4-1 except that the shear velocity V of the coating layer was set to $0.25 \times 10^{-9}$ m/s (the shear distance S = $7.48 \times 10^{-9}$ m) for 30 seconds.

(Example 8-2)

An anti-glare film of Example 8-2 was obtained in the same manner as in Example 8-1 except that the shear velocity V of the coating layer was set to $0.25 \times 10^{-9}$ m/s (the shear distance S = $29.92 \times 10^{-9}$ m) for 120 seconds.

(Example 9-1)

An anti-glare film of Example 9-1 was obtained in the same manner as in Example 1-1 except that the amount of the particles to be added was set to 6 parts by weight, the solid concentration was set to 45 wt%, and the shear velocity V of the  coating layer was set to $0.17 \times 10^{-9}$ m/s (the shear distance S = $0.51 \times 10^{-9}$ m) for 3 seconds.

(Example 9-2)

An anti-glare film of Example 9-2 was obtained in the same manner as in Example 9-1 except that the shear velocity V of the coating layer was set to $0.17 \times 10^{-9}$ m/s (the shear distance S = $0.85 \times 10^{-9}$ m) for 5 seconds.

(Example 9-3)

An anti-glare film of Example 9-3 was obtained in the same manner as in Example 9-1 except that the amount of the particles to be added was set to 8 parts by weight, and the shear velocity V of the coating layer was set to $0.07 \times 10^{-9}$ m/s (the shear distance S = $0.21 \times 10^{-9}$ m) for 3 seconds.

(Example 9-4)

An anti-glare film of Example 9-4 was obtained in the same manner as in Example 9-3 except that the shear velocity V of the coating layer was set to $0.07 \times 10^{-9}$ m/s (the shear distance S = $0.35 \times 10^{-9}$ m) for 5 seconds.

(Example 9-5)

An anti-glare film of Example 9-5 was obtained in the same manner as in Example 9-3 except that the amount of the particles to be added was set to 10 parts by weight.

(Example 9-6)

An anti-glare film of Example 9-6 was obtained in the same manner as in Example 9-5 except that the shear velocity V of the coating layer was set to $0.07 \times 10^{-9}$ m/s (the shear distance S = $0.35 \times 10^{-9}$ m) for 5 seconds.

(Example 9-7)

An anti-glare film of Example 9-7 was obtained in the same manner as in Example 9-3 except that the amount of the particles to be added was set to 12 parts by weight.

(Reference Example 1-1)

An anti-glare film of Reference Example 1-1 was obtained in the same manner as in Example 1-1 except that the transparent plastic film base was not tilted, and the shear velocity V of the coating layer was set to $0.00 \times 10^{-9}$ m/s (the shear distance S = $0.00 \times 10^{-9}$ m) for 30 seconds.

(Reference Example 2-1)

An anti-glare film of Reference Example 2-1 was obtained in the same manner as in Example 2-1 except that the transparent plastic film base was not tilted, and the shear velocity V of the coating layer was set to $0.00 \times 10^{-9}$ m/s (the shear distance S = $0 \times 10^{-9}$ m) for 30 seconds.

(Reference Example 3-1)

An anti-glare film of Reference Example 3-1 was obtained in the same manner as in Example 3-1 except that the transparent plastic film base was not tilted, and the shear velocity V of the coating layer was set to $0.00 \times 10^{-9}$ m/s (the shear distance S = $0 \times 10^{-9}$ m) for 30 seconds.

(Reference Example 4-1)

An anti-glare film of Reference Example 4-1 was obtained in the same manner as in Example 4-1 except that the transparent plastic film base was not tilted, and the shear velocity V of the coating layer was set to $0.00 \times 10^{-9}$ m/s (the shear distance S = $0 \times 10^{-9}$ m) for 60 seconds.

(Reference Example 5-1)

An anti-glare film of Reference Example 5-1 was obtained in the same manner as in Example 5-1 except that the transparent plastic film base was not tilted, and the shear velocity V of the coating layer was set to $0.00 \times 10^{-9}$ m/s (the shear distance S = $0 \times 10^{-9}$ m) for 60 seconds.

(Reference Example 6-1)

An anti-glare film of Reference Example 6-1 was obtained in the same manner as in Example 6-1 except that the transparent plastic film base was not tilted, and the shear velocity V of the coating layer was set to $0.00 \times 10^{-9}$ m/s (the shear distance S = $0 \times 10^{-9}$ m) for 60 seconds.

(Reference Example 7-1)

An anti-glare film of Reference Example 7-1 was obtained in the same manner as in Example 2-1 except that the shear velocity V of the coating layer was set to $0.27 \times 10^{-9}$ m/s (the shear distance S = $0 \times 10^{-9}$ m) for 0 second.

(Reference Example 8-1)

An anti-glare film of Reference Example 8-1 was obtained in the same manner as in Example 4-1 except that the shear velocity V of the coating layer was set to $0.25 \times 10^{-9}$ m/s (the shear distance S = $0 \times 10^{-9}$ m) for 0 second.

Various characteristics of the anti-glare films of the examples and the reference examples obtained as described above were measured or evaluated. The results of these are shown in Table 1 below.

[Table 1]

| | Particle (pts.wt.) | Thixotropic agent (pts.wt.) | Solvent | Solid concentration (%) | Particle size D (μm) | Anti-glare layer thickness d (μm) | D/d | Ti value | Coating layer specific gravity k (kg/m³) | Acceleration a (m/s²) | Coating layer thickness (WET layer thickness) h (μm) | Coating layer viscosity η (mPa·s) | Shear velocity V (nm/s) | Holding time t (sec) | Shear distance S (nm) | Surface profile | | | Outward appearance | Evaluation by visual check | |
| | | | | | | | | | | | | | | | | Ra (μm) | Sm (mm) | θa (°) | Anti-glare property | White blur | Appearance |
|---|---|---|---|---|---|---|---|---|---|---|---|---|---|---|---|---|---|---|---|---|---|
| Ex. 1-1 | 2 | 0.4 | Toluene/CPN | 50 | 3 | 7 | 0.43 | 2.50 | 1.02 | 9.80 | 14.0 | 11 | 0.18 | 30.00 | 5.34 | 0.074 | 0.204 | 0.258 | G | AA | J |
| Ex. 1-2 | 2 | 0.4 | Toluene/CPN | 50 | 3 | 7 | 0.43 | 2.50 | 1.02 | 4.90 | 14.0 | 11 | 0.09 | 30.00 | 2.67 | 0.046 | 0.153 | 0.235 | G | AA | J |
| Ex. 1-3 | 2 | 0.4 | Toluene/CPN | 50 | 3 | 7 | 0.43 | 2.50 | 1.02 | 2.00 | 14.0 | 11 | 0.04 | 30.00 | 1.09 | 0.027 | 0.103 | 0.195 | NG | – | – |
| Ex. 2-1 | 2 | 0.4 | Toluene/CPN | 40 | 3 | 7 | 0.43 | 1.90 | 0.99 | 1.96 | 17.5 | 5.5 | 0.11 | 30.00 | 3.24 | 0.092 | 0.216 | 0.325 | G | AA | J |
| Ex. 2-2 | 2 | 0.4 | Toluene/CPN | 40 | 3 | 7 | 0.43 | 1.90 | 0.99 | 4.90 | 17.5 | 5.5 | 0.27 | 30.00 | 8.10 | 0.204 | 0.285 | 0.430 | G | A | * |
| Ex. 2-3 | 2 | 0.4 | Toluene/CPN | 40 | 3 | 7 | 0.43 | 1.90 | 0.99 | 9.60 | 17.5 | 5.5 | 0.53 | 30.00 | 15.88 | 0.360 | 0.339 | 0.537 | G | A | * |
| Ex. 3-1 | 2 | 0.4 | Toluene/CPN | 33 | 3 | 6.5 | 0.46 | 1.60 | 0.97 | 2.00 | 19.7 | 3.3 | 0.23 | 30.00 | 6.84 | 0.130 | 0.252 | 0.367 | G | AA | J |
| Ex. 3-2 | 2 | 0.4 | Toluene/CPN | 33 | 3 | 6.5 | 0.46 | 1.60 | 0.97 | 4.90 | 19.7 | 3.3 | 0.56 | 30.00 | 16.76 | 0.340 | 0.314 | 0.625 | G | A | * |
| Ex. 3-3 | 2 | 0.4 | Toluene/CPN | 33 | 3 | 6.5 | 0.46 | 1.60 | 0.97 | 9.80 | 19.7 | 3.3 | 1.12 | 30.00 | 33.53 | 0.490 | 0.356 | 0.598 | G | A | * |
| Ex. 4-1 | 7 | 0 | PM/CPN | 40 | 3 | 7 | 0.43 | 1.10 | 1.03 | 4.90 | 17.5 | 6.2 | 0.25 | 60.00 | 14.96 | 0.069 | 0.152 | 0.392 | G | B | M |
| Ex. 4-2 | 7 | 0 | PM/CPN | 40 | 3 | 7 | 0.43 | 1.10 | 1.03 | 9.80 | 17.5 | 6.2 | 0.50 | 60.00 | 29.92 | 0.123 | 0.202 | 0.495 | G | B | M |
| Ex. 4-3 | 7 | 0 | PM/CPN | 40 | 3 | 7 | 0.43 | 1.10 | 1.03 | 2.00 | 17.5 | 6.2 | 0.10 | 60.00 | 6.11 | 0.052 | 0.145 | 0.373 | NG | – | – |
| Ex. 5-1 | 7 | 0 | PM/CPN | 33 | 3 | 6.5 | 0.46 | 1.10 | 1.01 | 2.00 | 19.7 | 4.5 | 0.17 | 60.00 | 10.45 | 0.070 | 0.183 | 0.383 | G | B | M |
| Ex. 5-2 | 7 | 0 | PM/CPN | 33 | 3 | 6.5 | 0.46 | 1.10 | 1.01 | 4.90 | 19.7 | 4.5 | 0.43 | 60.00 | 25.60 | 0.120 | 0.190 | 0.492 | G | B | M |
| Ex. 5-3 | 7 | 0 | PM/CPN | 33 | 3 | 6.5 | 0.46 | 1.10 | 1.01 | 9.80 | 19.7 | 4.5 | 0.85 | 60.00 | 51.20 | 0.208 | 0.244 | 0.618 | G | B | * |

| | Particle (pts.wt.) | Thixotropic agent (pts.wt.) | Solvent | Solid concentration (%) | Particle size D (μm) | Anti-glare layer thickness d (μm) | D/d | Ti value | Coating layer specific gravity k (kg/m³) | Acceleration a (m/s²) | Coating layer thickness (WET layer thickness) h (μm) | Coating layer viscosity η (mPa·s) | Shear velocity V (nm/s) | Holding time t (sec) | Shear distance S (nm) | Surface profile Ra (μm) | Sm (mm) | θa (°) | Outward appearance Anti-glare property | Evaluation by visual check White blur | Appearance |
|---|---|---|---|---|---|---|---|---|---|---|---|---|---|---|---|---|---|---|---|---|---|
| Ex. 6-1 | 7 | 0 | PM/CPN | 50 | 3 | 7 | 0.43 | 1.10 | 1.06 | 9.80 | 14.0 | 10 | 0.20 | 60.00 | 12.22 | 0.034 | 0.078 | 0.312 | G | B | M |
| Ex. 6-2 | 7 | 0 | PM/CPN | 50 | 3 | 7 | 0.43 | 1.10 | 1.06 | 2.00 | 14.0 | 10 | 0.04 | 60.00 | 2.49 | 0.020 | 0.066 | 0.248 | NG | – | – |
| Ex. 6-3 | 7 | 0 | PM/CPN | 50 | 3 | 7 | 0.43 | 1.10 | 1.06 | 4.90 | 14.0 | 10 | 0.10 | 60.00 | 6.11 | 0.025 | 0.061 | 0.262 | NG | – | – |
| Ex. 7-1 | 2 | 0.4 | Toluene/CPN | 40 | 3 | 7 | 0.43 | 1.90 | 0.99 | 4.90 | 17.5 | 5.5 | 0.27 | 3.00 | 0.81 | 0.135 | 0.259 | 0.287 | G | AA | J |
| Ex. 7-2 | 2 | 0.4 | Toluene/CPN | 40 | 3 | 7 | 0.43 | 1.90 | 0.99 | 4.90 | 17.5 | 5.5 | 0.27 | 5.00 | 1.35 | 0.158 | 0.271 | 0.332 | G | AA | J |
| Ex. 7-3 | 2 | 0.4 | Toluene/CPN | 40 | 3 | 7 | 0.43 | 1.90 | 0.99 | 4.90 | 17.5 | 5.5 | 0.27 | 10.00 | 2.70 | 0.177 | 0.283 | 0.368 | G | AA | J |
| Ex. 7-4 | 2 | 0.4 | Toluene/CPN | 40 | 3 | 7 | 0.43 | 1.90 | 0.99 | 4.90 | 17.5 | 5.5 | 0.27 | 30.00 | 8.10 | 0.204 | 0.285 | 0.430 | G | A | * |
| Ex. 7-5 | 5 | 0.4 | Toluene/CPN | 40 | 3 | 7 | 0.43 | 1.90 | 0.99 | 4.90 | 17.5 | 5.5 | 0.27 | 10.00 | 2.70 | 0.223 | 0.240 | 0.590 | G | A | * |
| Ex. 8-1 | 7 | 0 | PM/CPN | 40 | 3 | 7 | 0.43 | 1.10 | 1.03 | 4.90 | 17.5 | 6.2 | 0.25 | 30.00 | 7.48 | 0.045 | 0.143 | 0.302 | G | B | M |
| Ex. 8-2 | 7 | 0 | PM/CPN | 40 | 3 | 7 | 0.43 | 1.10 | 1.03 | 4.90 | 17.5 | 6.2 | 0.25 | 120.00 | 29.92 | 0.070 | 0.162 | 0.399 | G | B | M |
| Ex. 9-1 | 6 | 0.4 | Toluene/CPN | 45 | 3 | 7 | 0.43 | 2.20 | 1 | 4.90 | 15.6 | 7 | 0.17 | 3.00 | 0.51 | 0.060 | 0.088 | 0.420 | G | B | M |
| Ex. 9-2 | 6 | 0.4 | Toluene/CPN | 45 | 3 | 7 | 0.43 | 2.20 | 1 | 4.90 | 15.6 | 7 | 0.17 | 5.00 | 0.85 | 0.128 | 0.198 | 0.500 | G | B | M |
| Ex. 9-3 | 8 | 0.4 | Toluene/CPN | 45 | 3 | 7 | 0.43 | 2.20 | 1 | 2.00 | 15.6 | 7 | 0.07 | 3.00 | 0.21 | 0.085 | 0.072 | 0.520 | G | B | M |
| Ex. 9-4 | 8 | 0.4 | Toluene/CPN | 45 | 3 | 7 | 0.43 | 2.20 | 1 | 2.00 | 15.6 | 7 | 0.07 | 5.00 | 0.35 | 0.188 | 0.177 | 0.570 | G | B | M |
| Ex. 9-5 | 10 | 0.4 | Toluene/CPN | 45 | 3 | 7 | 0.43 | 2.20 | 1 | 2.00 | 15.6 | 7 | 0.07 | 3.00 | 0.21 | 0.223 | 0.077 | 0.680 | G | B | * |
| Ex. 9-6 | 10 | 0.4 | Toluene/CPN | 45 | 3 | 7 | 0.43 | 2.20 | 1 | 2.00 | 15.6 | 7 | 0.07 | 5.00 | 0.35 | 0.205 | 0.173 | 0.720 | G | B | * |
| Ex. 9-7 | 12 | 0.4 | Toluene/CPN | 45 | 3 | 7 | 0.43 | 2.20 | 1 | 2.00 | 15.6 | 7 | 0.07 | 3.00 | 0.21 | 0.280 | 0.082 | 0.880 | G | B | * |

| | Particle (pts.wt.) | Thixotropic agent (pts.wt.) | Solvent | Solid concentration (%) | Particle size D (μm) | Anti-glare layer thickness d (μm) | D/d | Ti value | Coating layer specific gravity k (kg/m³) | Acceleration a (m/s²) | Coating layer thickness (WET layer thickness) h (μm) | Coating layer viscosity η (mPa·s) | Shear velocity V (nm/s) | Holding time t (sec) | Shear distance S (nm) | Surface profile | | | Outward appearance | Evaluation by visual check | |
| --- | --- | --- | --- | --- | --- | --- | --- | --- | --- | --- | --- | --- | --- | --- | --- | --- | --- | --- | --- | --- | --- |
| | | | | | | | | | | | | | | | | Ra (μm) | Sm (mm) | θa (°) | Anti-glare property | White blur | Appearance |
| Ref. Ex. 1-1 | 2 | 0.4 | Toluene/CPN | 50 | 3 | 7 | 0.43 | 2.50 | 1.02 | 0.00 | 14.0 | 11 | 0 | 30.00 | 0.00 | 0.019 | 0.097 | 0.160 | NG | – | – |
| Ref. Ex. 2-1 | 2 | 0.4 | Toluene/CPN | 40 | 3 | 7 | 0.43 | 1.90 | 0.99 | 0.00 | 17.5 | 5.5 | 0 | 30.00 | 0.00 | 0.034 | 0.167 | 0.217 | NG | – | – |
| Ref. Ex. 3-1 | 2 | 0.4 | Toluene/CPN | 33 | 3 | 6.5 | 0.46 | 1.60 | 0.97 | 0.00 | 19.7 | 3.3 | 0 | 30.00 | 0.00 | 0.028 | 0.132 | 0.210 | NG | – | – |
| Ref. Ex. 4-1 | 7 | 0 | PM/CPN | 40 | 3 | 7 | 0.43 | 1.10 | 1.03 | 0.00 | 17.5 | 6.2 | 0 | 60.00 | 0.00 | 0.022 | 0.066 | 0.248 | NG | – | – |
| Ref. Ex. 5-1 | 7 | 0 | PM/CPN | 33 | 3 | 6.5 | 0.46 | 1.10 | 1.01 | 0.00 | 19.7 | 4.5 | 0 | 60.00 | 0.00 | 0.022 | 0.083 | 0.228 | NG | – | – |
| Ref. Ex. 6-1 | 7 | 0 | PM/CPN | 50 | 3 | 7 | 0.43 | 1.10 | 1.06 | 0.00 | 14.0 | 10 | 0 | 60.00 | 0.00 | 0.020 | 0.066 | 0.248 | NG | – | – |
| Ref. Ex.7-1 | 2 | 0.4 | Toluene/CPN | 40 | 3 | 7 | 0.43 | 1.90 | 0.99 | 4.90 | 17.5 | 5.5 | 0.27 | 0.00 | 0.00 | 0.034 | 0.167 | 0.217 | NG | – | – |
| Ref. Ex. 8-1 | 7 | 0 | PM/CPN | 40 | 3 | 7 | 0.43 | 1.10 | 1.03 | 4.90 | 17.5 | 6.2 | 0.25 | 0.00 | 0.00 | 0.022 | 0.066 | 0.248 | NG | – | – |

As shown in Table 1, in all of the examples, the arithmetic average surface roughness Ra was from 0.020 to 0.490, the average convex-to-convex distance Sm was from 0.061 to 0.356, and the average tilt angle θa was from 0.195 to 0.880, so that surface profiles could be widely and freely controlled using the same kinds of resin and particles. In Examples 4, 5, and 6 using the coating solution containing no thixotropy-imparting agent, the arithmetic average surface roughness Ra was from 0.020 to 0.280, the average convex-to-convex distance Sm was from 0.061 to 0.244, and the average tilt angle θa was from 0.248 to 0.618. On the other hand, in Examples 1 to 3, 7, and 9 using the coating solution containing thixotropy-imparting agents, the arithmetic average surface roughness Ra was from 0.027 to 0.490, the average convex-to-convex distance Sm was from 0.082 to 0.356, and the average tilt angle θa was from 0.195 to 0.880. That is, surface profiles of the anti-glare films were widely controlled more easily, and specifically, the upper limits of the arithmetic average surface roughness Ra, the average convex-to-convex distance Sm, and the average tilt angle θa could more easily be increased, by the use of the coating solution containing thixotropy-imparting agents. In the many examples, both of anti-glare properties and white blur were favorable. In the examples determined as "B" in the white blur evaluation, there was no practical problem, and matte (sedate outward appearance, appearance evaluation M) or really intense anti-glare properties could be obtained as mentioned above. All of anti-glare films determined as "*" in the appearance evaluation by visual check (having really intense anti-glare properties) were determined as "G" in the anti-glare property evaluation, and Ra exceeded 0.20 μm. As described above, according to the examples of the present invention, surface profiles of the anti-glare films could be widely and freely controlled. Moreover, in the examples, the shear holding time could be reduced, and white blur could be prevented from occurring by the use of the coating solution containing thixotropy-imparting agents. In the case of using the coating solution containing thixotropy-imparting agents, in Examples 1-1, 1-2, 2-1, 3-1, 7-1, 7-2, and 7-3 with the shear velocity V of 0.05 or more, the shear distance S from $0.5 \times 10^{-9}$ to $8.0 \times 10^{-9}$ m, and the number of parts of particles to be added of 2, white blur could be further prevented from occurring (white blur evaluation: AA), an appearance of sharp black (Jet Black) was obtained even having asperities (appearance evaluation: J). On the other hand, in Reference Examples 1-1 to 8-1 with the shear distance S of the coating layer of 0 (i.e., with no shearing), the arithmetic average surface roughness Ra was from 0.019 to 0.034, the average convex-to-convex distance Sm was from 0.066 to 0.167, and the average tilt angle θa was from 0.160 to 0.248, so that an extent of controlling a surface profile was really small compared with the examples. Further, the films of Reference Examples 1-1 to 8-1 were inferior in anti-glare properties. Furthermore, almost no asperities were formed on the surface of the anti-glare layer, so that white blur did not occur. Thus, the white blur evaluation could not be conducted (evaluated as "-").

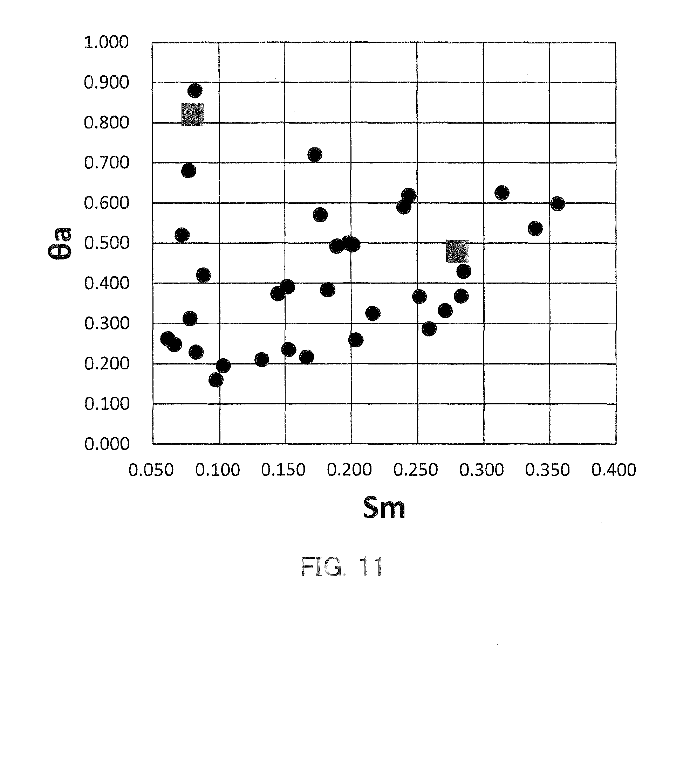

A graph of FIG. 11 shows surface profiles of the anti-glare films of the examples (the average convex-to-convex distances Sm and the average tilt angles θa shown in Table 1). In FIG. 11, ● (black dots) indicate data of the anti-glare films of the examples, ■ (black squares) (two indications) indicate data of conventional anti-glare films. As shown in FIG. 11, surface profiles (the average convex-to-convex distances Sm and the average tilt angles θa) of the two anti-glare films indicated by ■ are largely different from each other. Conventionally, it has been required to use a different type of a resin and a different type (particle size) of particles in order to largely change a surface profile of an anti-glare film. In contrast, according to the examples of the present invention, as shown in FIG. 11, the surface profiles could be controlled in a wide range which is the same or wider than the case of the conventional anti-glare films using different kinds of resin and different kinds of particles, by merely controlling the shear distance S and the number of parts by weight of particles (the number of parts by weight of particles relative to 100 parts by weight of the resin) using the same kind of resin and the same kind of particles.

Next, image displays in which the respective anti-glare films (the following Examples 10-1 and 10-2) according to the present invention were placed so that one direction in which the particles were gathered coincided with the longitudinal direction of the black matrix pattern were produced, and characteristics thereof were evaluated (Examples 11-1 and 11-2 described below).

(Example 10-1 [Anti-glare film])

As a resin contained in an anti-glare layer-forming material, 80 parts by weight of an ultraviolet-curable urethane acrylate resin (produced by Nippon Synthetic Chemical Industry Co., Ltd., "UV1700B" (trade name), with a solid content of 100%) and 20 parts by weight of polyfunctional acrylate (produced by Osaka Organic Chemical Industry Ltd., "BISCOAT #300" (trade name), with a solid content of 100%) containing pentaerythritol triacrylate as a main component were provided. 2 parts by weight of cross-linked polymethylmethacrylate particles (produced by Sekisui Plastics Co., Ltd., "TECHPOLYMER" (trade name), with a weight-average particle size: 5 μm and a refractive index: 1.51) as particles, 0.4 parts by weight of synthesized smectite which is organoclay (produced by CO-OP Chemical Co. Ltd., "LUCENTITE SAN" (trade name)) as thixotropy-imparting agents, 3 parts by weight of a photoinitiator (produced by BASF, "IRGACURE 907" (trade name)), and 0.5 parts by weight of a leveling agent (produced by DIC Corporation, "PC4100" (trade name), with a solid content of 10%) were mixed relative to 100 parts by weight of the solid content of the resin. The organoclay was used after diluting it with toluene so as to have a solid content of 6%. This mixture thus obtained was diluted with a toluene/cyclopentanone (CPN) mixed solvent (with a weight ratio of 80/20) so as to have a solid concentration of 40 wt%, which was then subjected to ultrasonic dispersion using an ultrasonic disperser. Thus, an anti-glare layer-forming material (coating solution) was prepared.

As a translucent base, a transparent plastic film base (a triacetylcellulose film, produced by Fujifilm Corporation, "FUJITAC" (trade name), with a thickness: 60 $\mu$m and a refractive index: 1.49) was provided. The anti-glare layer-forming material (coating solution) was applied to one surface of the transparent plastic film base using a wire bar. Thus, a coating layer was formed. At that time, the transparent plastic film base was tilted as shown in FIG. 2A, and the surface slip velocity V of the coating layer was set to 0.127 $\times$ 10$^{-9}$ m/s for 5 seconds. For the sake of convenience of description, the direction in which the transparent plastic film base was tilted was "the MD (Machine Direction) direction of the anti-glare film" described below. In the case of an actual machine for producing an anti-glare film with a transfer of a long film by roll to roll, a film can be tilted in a direction in which the film is transferred, and thus, "the MD direction of the anti-glare film" coincides with the direction in which the film is transferred in the case of the actual device. The film direction orthogonal to this MD direction is "the TD (Transverse Direction) direction of the anti-glare film". Then, the coating layer was dried by heating it at 90°C for 2 minutes. Thereafter, the coating layer was subjected to a hardening treatment by irradiating it with ultraviolet at the amount of irradiation with a high-pressure mercury lamp of 300 mJ/cm$^2$. Thus, an anti-glare layer with a thickness of 7.5 $\mu$m was formed, and an anti-glare film of the present example was obtained.

(Example 10-2 [Anti-glare film])

An anti-glare film of Example 10-2 was obtained in the same manner as in Example 10-1 except that the cross-linked polystyrene particles (produced by Soken Chemical & Engineering Co., Ltd., "SX500" (trade name), with a weight-average particle size: 5 $\mu$m and a refractive index: 1.59) were used as the particles. The thickness of the anti-glare layer was 7.5 $\mu$m.

Various characteristics of image displays of Examples 10-1 and 10-2 obtained as described above were determined or evaluated. The results of these are shown in Table 2 below. Surface profiles were measured as mentioned above, and a surface profile in the MD direction and a surface profile in the TD direction of each of the anti-glare films of Examples 10-1 and 10-2 were measured. Moreover, anisotropy was evaluated, and a haze value was measured as follows.

(Evaluation of the presence or absence of anisotropy)

Anisotropy of surface asperities of the anti-glare film was evaluated according to the following criteria:

Evaluation criteria:

Presence: a value obtained by dividing the difference in Ra value between the MD direction and the TD direction by the bigger Ra value in the MD direction or the TD direction is 0.03 (3%) or more
Absence: a value obtained by dividing the difference in Ra value between the MD direction and the TD direction by the bigger Ra value in the MD direction or the TD direction is less than 0.03 (3%).

When an anti-glare film evaluated as "presence" according to the evaluation criteria is irradiated with light of a laser pointer, it can be observed that transmitted and scattered light has anisotropy by visual check as described below. Thus, the evaluation can be simply performed by visual check. That is, an image of the anti-glare film is projected on a white wall at a 5 m position from the anti-glare film by directly irradiating the anti-glare film with a laser at a 5 cm position from the anti-glare film using a laser pointer including a circular light source, and the shape of an image by the transmitted light is checked. When the shape is oval, the anti-glare film has anisotropic scattering, and it can be interpreted that flocculated bodies are formed in the longitudinal direction of the oval and the direction perpendicular thereof.

(Haze value)

A haze value was measured according to JIS K 7136 (2000 version) (haze (cloudiness)) using a haze meter ("HM-150" (trade name), produced by Murakami Color Research Laboratory).

[Table 2]

| | Particle (pts.wt.) | Thixotropic agent (pts.wt.) | Solid concentration (%) | Particle size D (μm) | Anti-glare layer thickness d (μm) | D/d | $\kappa$ (kg/m³) | a (m/s²) | h (×10⁻⁶ m) | $\eta$ (×10⁻³ Pa·s) | V (×10⁻⁹ m/s) | t (s) | S (×10⁻⁹ m) | Evaluation direction | Surface profile | | | Anisotropy | Haze (%) |
|---|---|---|---|---|---|---|---|---|---|---|---|---|---|---|---|---|---|---|---|
| | | | | | | | | | | | | | | | Ra (μm) | Sm (mm) | θa (°) | | |
| Ex. 10-1 | 2 | 0.4 | 40 | 5 | 7.5 | 0.67 | 0.99 | 2.0 | 18.75 | 5.5 | 0.127 | 5 | 0.633 | MD | 0.093 | 0.223 | 0.286 | Presence | 1 |
| | | | | | | | | | | | | | | TD | 0.081 | 0.215 | 0.274 | | |
| Ex. 10-2 | 2 | 0.4 | 40 | 5 | 7.5 | 0.67 | 0.99 | 2.0 | 18.75 | 5.5 | 0.127 | 5 | 0.633 | MD | 0.083 | 0.270 | 0.234 | Presence | 9 |
| | | | | | | | | | | | | | | TD | 0.075 | 0.265 | 0.230 | | |

27

As shown in Table 2, anisotropy was detected in the MD direction (film direction in which the transparent plastic film base was tilted after coating) and in the TD direction (film direction orthogonal to the MD direction) of each of the anti-glare films of Examples 10-1 and 10-2. The anti-glare films of Examples 10-1 and 10-2 included flocculated portions forming convex portions by flocculating particles on the surface thereof, and in the flocculated portions, the particles were present in the state of gathering in the TD direction (direction orthogonal to the MD direction) of the anti-glare film.

(Example 11-1 [Image display])

The anti-glare film 1 was placed on the visible side surface of the liquid crystal display panel so that the MD direction of the anti-glare film of Example 10-1 was orthogonal to the longitudinal direction of the black matrix pattern of the liquid crystal display panel. The definition of the black matrix pattern of the liquid crystal display panel was 120 ppi.

(Example 11-2 [Image display])

The anti-glare film 2 was placed on the visible side surface of the liquid crystal display panel so that the MD direction of the anti-glare film of Example 10-2 was orthogonal to the longitudinal direction of the black matrix pattern of the liquid crystal display panel. The definition of the black matrix pattern of the liquid crystal display panel was 200 ppi.

Various characteristics of each of the image displays of Examples 11-1 and 11-2 obtained as described above were measured or evaluated. The results of these were shown in Table 3 below. The contrast (panel contrast) evaluation and the glare evaluation were performed according to the following methods.

(Panel contrast evaluation)

A polarizing plate at a visible side of a liquid crystal cell removed from a liquid crystal television ("LC-32DX3" (trade name) produced by Sharp Corporation, with a size of 32 inch) was replaced with a commercially available polarizing plate having no anti-glare film ("NPF-TEG1465DU" (trade name) produced by Nitto Denko Corporation). A surface of the anti-glare film on which no anti-glare layer had been formed was attached to the replaced polarizing plate, with a pressure-sensitive adhesive. In a dark room, front luminances in black display and white display of the liquid crystal television were measured using a luminance colormeter ("BM-5" (trade name), produced by Topcon Technohouse Corporation). A contrast was determined from "the luminance in white display/the luminance in black display", and a decreasing ratio from a contrast in a condition where the anti-glare film was not attached was determined.
A panel contract was evaluated according to the following criteria:

Evaluation criteria:

A: decreasing ratio of less than 5%
B: decreasing ratio of 5% or more.

(Glare evaluation)

(1) A 185 $\mu$m-thickness polarizing plate was attached to a surface of the anti-glare film on which no anti-glare layer had been formed, which was then attached to a glass substrate.
(2) The glass substrate was placed on a black matrix pattern fixed on a table, and glare was evaluated by visual check.

Evaluation criteria:

A: almost no glare was observed
B: little glare was observed but does not cause practical problem
C: glare was observed.

[Table 3]

| | Anti-glare film | Placement direction * | Contrast | Glare (definition) | Anti-glare property |
|---|---|---|---|---|---|
| Example 11-1 | Anti-glare film 1 | MD | A | A (120 ppi) | G |

(continued)

| | Anti-glare film | Placement direction * | Contrast | Glare (definition) | Anti-glare property |
|---|---|---|---|---|---|
| Example 11-2 | Anti-glare film 2 | MD | B | A (200 ppi) | G |
| * The placement direction is orthogonal to the longitudinal direction of the black matrix pattern | | | | | |

As shown in Table 3, the results of the glare evaluation and anti-glare property evaluation were favorable in the image displays of Examples 11-1 and 11-2 in which an anti-glare film was placed so that one direction in which the particles were gathered (MD direction) coincided with the longitudinal direction of the black matrix pattern. In Example 11-1 using the anti-glare film of Example 10-1, the haze value of the anti-glare film was 1% which was low, so that the contrast was favorable, and the glare also was favorably prevented from occurring In Example 11-2 using the anti-glare film of Example 10-2, the haze value of the anti-glare film was 9% which was high, so that the contract was slightly deteriorated and however had no practical problem, and the glare was favorably prevented from occurring, and thus the anti-glare film is applicable to a high-definition panel.

The anti-glare film obtained by the method for producing an anti-glare film according to the present invention can be suitably used in optical elements such as polarizing plates, liquid crystal panels, and image displays such as LCDs (liquid crystal displays) and OLEDs (organic EL displays), for example. The use of the anti-glare film is not limited, and the anti-glare film is applicable in a wild range of fields.

REFERENCE CHARACTERS LIST

| | |
|---|---|
| 1 to 6, 12 | particle |
| 10 | chain double-dashed line |
| 11 | anti-glare layer |
| 13 | thixotropy-imparting agent |
| 14 | convex portion |
| 20 | translucent base |
| 21 | coating layer |
| 22 | coating solution |

**Claims**

1. A method for producing an anti-glare film, the method comprising the steps of:

coating a coating solution on at least one surface of a translucent base (20) to form a coating layer (21); and
curing the coating solution to form an anti-glare layer (11), wherein
the coating solution comprises a resin, particles (12), and a solvent,
the method further comprises the step of: shearing the coating solution coated on the translucent base (20), and
a surface profile of the anti-glare film is adjusted by adjusting a shear distance of the coating layer (21), defined by the following equation (I) in the step of shearing,

$$S = \int V dt \qquad (I)$$

where in the equation (I)
S: shear distance (m)
V: shear velocity (m/s)
t: shear holding time (s), and
the shear velocity V is defined by the following equation (II):

$$V = kah^2/\eta \qquad (II)$$

where in the equation (II)

k: specific gravity of coating layer ($kg/m^3$)

a: acceleration ($m/s^2$)

h: thickness of coating layer (m)

$\eta$: viscosity of coating layer (Pa•s)

provided that the acceleration a may change over time or may be constant.

2. The method according to claim 1, wherein
the shear distance S of the coating layer in the step of shearing is set in a range from $0.005 \times 10^{-9}$ to $120 \times 10^{-9}$ m.

3. The method according to claim 1 or 2, wherein
the shear velocity V is set in a range from $0.05 \times 10^{-9}$ to $2.0 \times 10^{-9}$ m/s and preferably $0.05 \times 10^{-9}$ to $1.0 \times 10^{-9}$ m/s.

4. The method according to any one of claims 1 to 3, wherein
the shear holding time is set in a range from 0.1 to 60 s.

5. The method according to any one of claims 1 to 5, wherein
the coating solution comprises thixotropy-imparting agents (13), wherein
the thixotropy-imparting agents are preferably at least one selected from the group consisting of organoclay, oxidized polyolefin, and denatured urea.

6. The method according to any one of claims 1 to 5, wherein
the anti-glare layer (11) has a thickness (d) in a range from 3 to 12 $\mu$m, and the particles (12) have a particle size (D) in a range from 2.5 to10 $\mu$m.

7. The method according to claim 6, wherein
a relationship between the thickness (d) and the particles size (D) is $0.3 \leq D/d \leq 0.9$.

8. The method according to any one of claims 1 to 7, wherein
a surface profile of the anti-glare film is adjusted by adjusting the number of parts by weight of the particles relative to 100 parts by weight of the resin in the coating solution.

9. The method according to any one of claims 1 to 8, wherein
the coating solution contains 0.2 to 12 parts by weight of the particles relative to 100 parts by weight of the resin.

10. An anti-glare film obtainable by the method according to any one of claims 1 to 9.

11. The anti-glare film according to claim 10, wherein
the anti-glare layer (11) comprises a flocculated portion forming a convex portion (14) on a surface of the anti-glare layer by flocculation of the particles (12), and
in the flocculated portion, the particles are present in the state of being gathered in one direction in an in-plane direction of the anti-glare layer.

12. The anti-glare film according to claim 10 or 11, wherein
the convex portion (14) has a height from a roughness mean line of the anti-glare layer of less than 0.4 times the thickness of the anti-glare layer.

13. The anti-glare film according to any one of claims 10 to 12, wherein
the number of defects in outward appearance having a maximum diameter of 200 $\mu$m or more is 1 or less per 1 $m^2$ of the anti-glare layer.

14. The anti-glare film according to any one of claims 10 to 13, comprising a permeable layer formed by permeating the resin through the translucent base (20), between the translucent base (20) and the anti-glare layer (11).

15. A polarizing plate comprising a polarizer; and the anti-glare film according to any one of claims 10 to 14.

16. An image display comprising the anti-glare film according to any one of claims 10 to 14 or the polarizing plate according to claim 15.

**17.** The image display according to claims 16, comprising:

the anti-glare film at a visible side surface; and
further a black matrix pattern, wherein
the antiglare layer (11) of the anti-glare film comprises a flocculated portion forming a convex portion (14) on a surface of the anti-glare layer by flocculation of the particles (12),
in the flocculated portion, the particles (12) are present in the state of being gathered in one direction in an in-plane direction of the anti-glare layer (11), and
the anti-glare film is placed so that the one direction in which the particles (12) are gathered coincides with a longitudinal direction of the black matrix pattern.

FIG. 1

FIG. 2A

FIG. 2B

FIG. 3

FIG. 4

FIG. 5

(a)

(b)

Coating layer

Translucent base

Anti-glare layer

Translucent base

FIG. 6

FIG. 7A

12

FIG. 7B

(a)

1 2 3 4 5 6

Coating layer

Translucent base

(b)

1 2 3 4 5 6

Anti-glare layer

Permeable layer

Translucent base

FIG. 8

Thixotropic agent distribution state (assumption)

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010102291 A
- JP 2010054737 A
- JP 2008090263 A
- JP 2008088309 A
- JP 2001343529 A
- WO 0137007 A